(19) Europäisches Patentamt
European Patent Office
Office européen des brevets

(11) **EP 3 406 353 B1**

(12) **EUROPEAN PATENT SPECIFICATION**

(45) Date of publication and mention
of the grant of the patent:
**24.02.2021 Bulletin 2021/08**

(51) Int Cl.:
*B05D 5/00* *(2006.01)*   *B05D 5/08* *(2006.01)*

(21) Application number: **18170018.8**

(22) Date of filing: **17.03.2014**

(54) **METHODS FOR LIQUID-IMPREGNATED SURFACES WITH ENHANCED DURABILITY**

VERFAHREN FÜR FLÜSSIGKEITSIMPRÄGNIERTE OBERFLÄCHEN MIT VERBESSERTER HALTBARKEIT

PROCÉDÉS POUR SURFACES IMPRÉGNÉES DE LIQUIDE À DURABILITÉ AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201361794493 P**

(43) Date of publication of application:
**28.11.2018 Bulletin 2018/48**

(62) Document number(s) of the earlier application(s) in accordance with Art. 76 EPC:
**14762823.4 / 2 969 257**

(73) Proprietor: **Liquiglide Inc.**
**Boston, Massachusetts 02199 (US)**

(72) Inventors:
• **SMITH, Jonathan David**
**Arlington, MA 02474 (US)**
• **HIBBEN, Charles W.**
**Darien, CT 06820 (US)**
• **CONG, Tao**
**Quincy, MA 02169 (US)**
• **CARBECK, Jeffrey**
**Belmont, MA 02478 (US)**
• **BOERS, Carsten**
**Cambridge, MA 02142 (US)**
• **VARANASI, Kripa**
**Lexington, MA 02420 (US)**
• **GREEN, Emily**
**Boston, MA 02116 (US)**

(74) Representative: **Gill Jennings & Every LLP**
**The Broadgate Tower**
**20 Primrose Street**
**London EC2A 2ES (GB)**

(56) References cited:
**WO-A2-2012/100099     US-A1- 2013 032 316**

**EP 3 406 353 B1**

**Description**

*Background*

Embodiments described herein relate generally to devices, systems and methods for producing liquid impregnated surfaces with enhanced durability.

The advent of micro/nano-engineered surfaces in the last decade has opened up new techniques for enhancing a wide variety of physical phenomena in thermofluids sciences. For example, the use of micro/nano surface textures has provided non-wetting surfaces capable of achieving less viscous drag, reduced adhesion to ice and other materials, self-cleaning, and water repellency. These improvements result generally from diminished contact (i.e., less wetting) between the solid surfaces and adjacent liquids.

One type of non-wetting surface of interest is a super hydrophobic surface. In general, a super hydrophobic surface includes micro/nano-scale roughness on an intrinsically hydrophobic surface, such as a hydrophobic coating. Super hydrophobic surfaces resist contact with water by virtue of an air-water interface within the micro/nano surface textures that allow for a higher proportion of the surface area beneath the droplet to be air.

One of the drawbacks of existing non-wetting surfaces (e.g., super hydrophobic, super oleophobic, and super metallophobic surfaces) is that they are susceptible to impalement, which destroys the non-wetting capabilities of the surface. Impalement occurs when an impinging liquid (e.g., a liquid droplet or liquid stream) displaces the air entrained within the surface textures. Previous efforts to prevent impalement have focused on reducing surface texture dimensions from micro-scale to nano-scale.

Another drawback with existing non-wetting surfaces is that they are susceptible to ice formation and adhesion. For example, when frost forms on existing super hydrophobic surfaces, the surfaces become hydrophilic. Under freezing conditions, water droplets can stick to the surface, and ice may accumulate. Removal of the ice can be difficult because the ice may interlock with the textures of the surface. Similarly, when these surfaces are exposed to solutions saturated with salts, for example as in desalination or oil and gas applications, scale builds on surfaces and results in loss of functionality. Similar limitations of existing non-wetting surfaces include problems with hydrate formation, and formation of other organic or inorganic deposits on the surfaces.

Thus, there is a need for non-wetting surfaces that are more robust. In particular, there is a need for non-wetting surfaces that are more durable and can maintain super hydrophobicity even after repeated use.

WO2012/100099 discloses surfaces with high pressure stability, optical transparency, and self-healing characteristics. US2013/032316 discloses liquid-impregnated surfaces, methods of making, and devices incorporating the same.

*Summary*

Embodiments described herein relate generally to devices, systems and methods for producing liquid impregnated surfaces with enhanced durability. In a first embodiment, a method comprises disposing a plurality of solid features on a first surface, the first surface having a first roll off angle; communicating an impregnating liquid into the interstitial regions between the plurality of solid features, the impregnating liquid and the plurality of solid features at least partially forming a second surface having a second roll off angle less than the first roll off angle; and reapplying the impregnating liquid via a liquid delivery mechanism to maintain the second roll off angle of the second surface less than the first roll off angle, the liquid delivery mechanism including a reservoir configured to contain a supply of impregnating liquid and a pumping mechanism configured to transfer impregnating liquid from the reservoir to the interstitial regions.

*Brief Description of the Drawings*

FIG. 1 is a schematic illustration of an apparatus that includes a liquid-impregnated surface and a liquid delivery mechanism, according to an embodiment.

FIG. 2A shows a schematic illustration of a droplet of a liquid on a surface showing a critical contact angle. FIG. 2B shows the advancing and receding contact angles of the liquid droplet when the surface is inclined.

FIG. 3 is a schematic illustration of a surface with semi solid features, according to an embodiment.

FIG. 4 is a schematic illustration of a surface with hierarchical semi solid features, according to an embodiment.

2

FIG. 5 is a schematic illustration of the surface of FIG. 3 partially impregnated with an impregnating liquid.

FIG. 6 is an enlarged view of the region shown by arrow A of the liquid impregnated surface of FIG. 3.

FIG. 7a-b is a schematic diagram of a liquid droplet placed on a liquid impregnated surface, according to an embodiment. FIG. 7c-d show photographs of a water droplet on a liquid impregnated surface. FIGS. 7e-f are laser confocal microscopy images and FIGS. 7i-j are ESEM images of a liquid impregnated surface according to an embodiment.

FIG. 8 show schematic illustrations and corresponding equations of various thermodynamic states of a liquid-impregnated surface.

FIG. 9 shows a thermodynamic regime map of various states of a liquid-impregnated surface.

FIG. 10a shows a plot of measured roll off angles of different liquid impregnated surfaces. FIG. 10b shows SEM images of a liquid impregnated surface with solid features and FIG. 10c shows SEM images of liquid impregnated surfaces with hierarchical solid features. FIG. 10d shows a non-dimensional plot of scaled gravitational force at the instant of roll-off as a function of the relevant pinning force of the liquid impregnated surfaces of FIG. 10a.

FIG. 11a shows measured velocities of water droplets as a function of substrate tilt angle. FIG. 11b shows a schematic of a water droplet moving on a liquid-impregnated surface showing the various parameters considered in a scaling model, described herein. FIG. 11c shows trajectories of coffee particles entrained in the water droplet rolling on the liquid-impregnated surface. FIG. 11d shows a non-dimensional plot obtained from the model described herein.

FIG. 12 shows a liquid-impregnated surface according to an embodiment.

FIG. 13A-B shows a liquid-impregnated surface fluidically coupled to a reservoir, according to an embodiment.

FIG. 14 shows a liquid-impregnated surface included in a container that includes a multi-phase liquid, according to an embodiment.

FIG. 15A shows a side-cross section view of an apparatus that includes a pipe having a liquid-impregnated surface and a sheath disposed around the pipe such that a reservoir for containing a volume of replenishing impregnating liquid is formed between the pipe and the sheath. FIG. 15B shows a front cross-section view of the apparatus taken along the line 15B-15B shown in FIG. 15A.

FIG. 16 shows a side cross-section view of an apparatus that includes a pipe having a liquid-impregnated surface and a tee disposed around a through hole portion of the pipe such that a reservoir for containing a volume of replenishing impregnating liquid is formed between the pipe and the tee.

FIG. 17 shows a liquid delivery mechanism that includes sponge, according to an embodiment.

FIG. 18A shows a container that includes an impregnating liquid reservoir and a deformable surface in a first configuration, according to an embodiment. FIG. 18B shows the container of FIG. 18A in a second configuration.

FIG. 19 shows a flow chart illustrating a method for forming a liquid-impregnated surface, according to an embodiment

FIG. 20A shows an SEM image of a PET surface spray coated with beeswax particles. FIG. 20B shows an enlarged SEM image of a portion of the surface shown in FIG. 20A.

FIG. 21A shows an SEM image of an aluminum surface etched in an acid to form hierarchical solid features. FIG. 21B shows an enlarged SEM image of a portion of the aluminum surface shown in FIG. 21A showing the hierarchical nanofeatures formed on the surface.

FIG. 22A shows an SEM image of a stainless steel surface which was sand blasted to form solid features. FIG. 22B shows an enlarged SEM image of a portion of the aluminum surface shown in FIG. 22A.

FIG. 23a shows condensation of water droplets on a first liquid-impregnated surface that includes a 0.0001 m$^2$/s

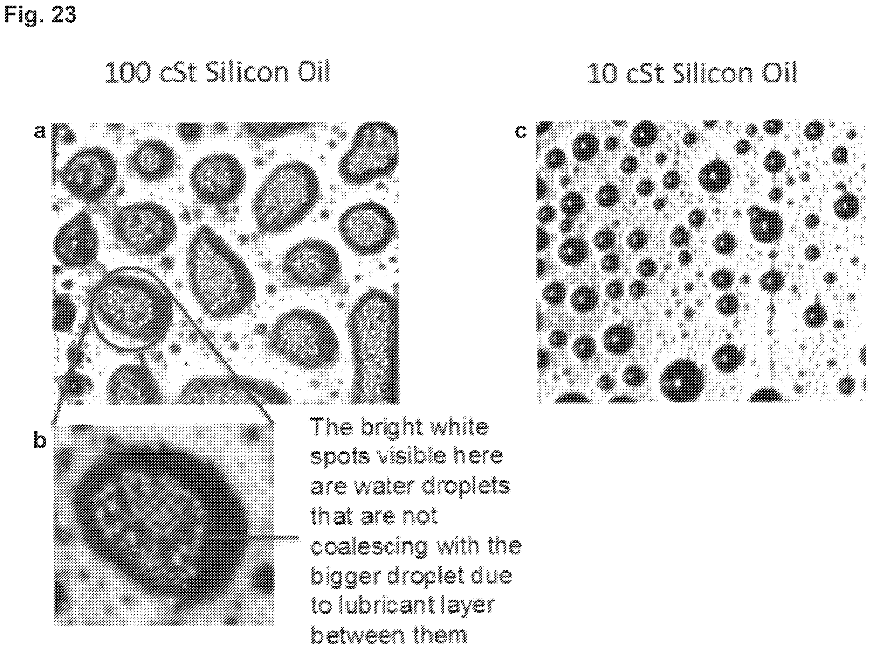

(100 cSt) silicon oil as an impregnating liquid. FIG. 23b shows an enlarged view of a portion of the first liquid-impregnated surface. FIG. 23c shows condensation of water droplets on a second liquid-impregnated surface that includes a 0.00001 $m^2$/s (10 cSt) silicone oil as the impregnating liquid.

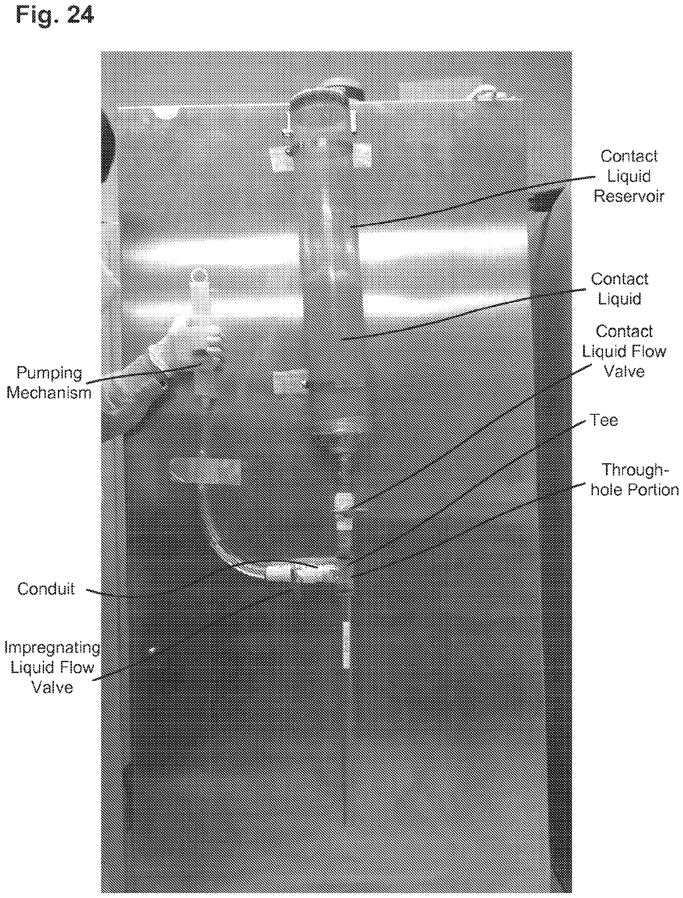

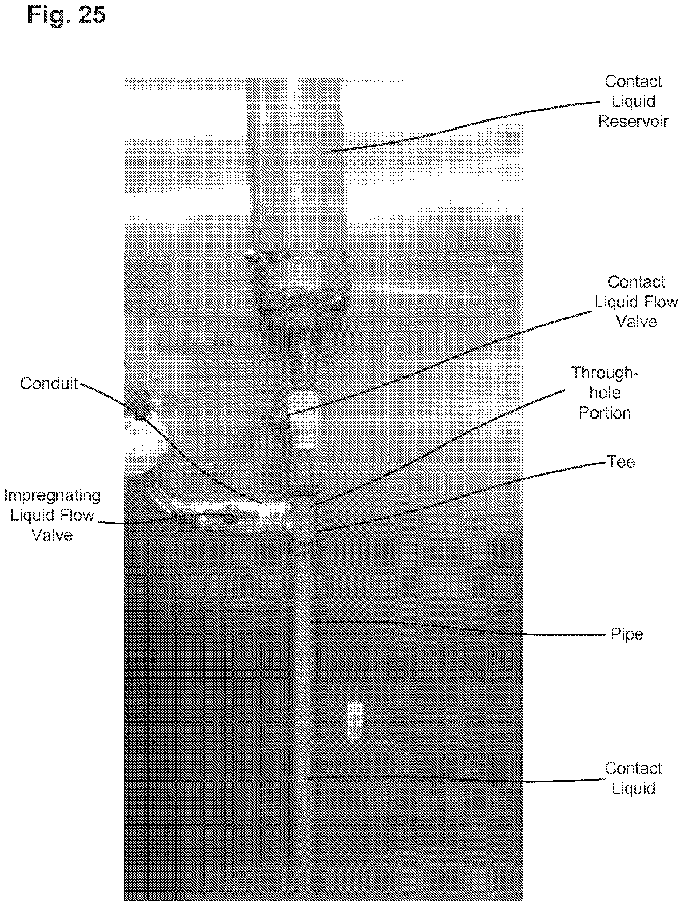

FIGS. 24 and 25 show an optical image of an exemplary apparatus that includes a pipe having a liquid-impregnated surface and a tee coupled to a through hole portion of the pipe such that a reservoir for housing replenishing impregnating liquid is formed between the pipe and the tee.

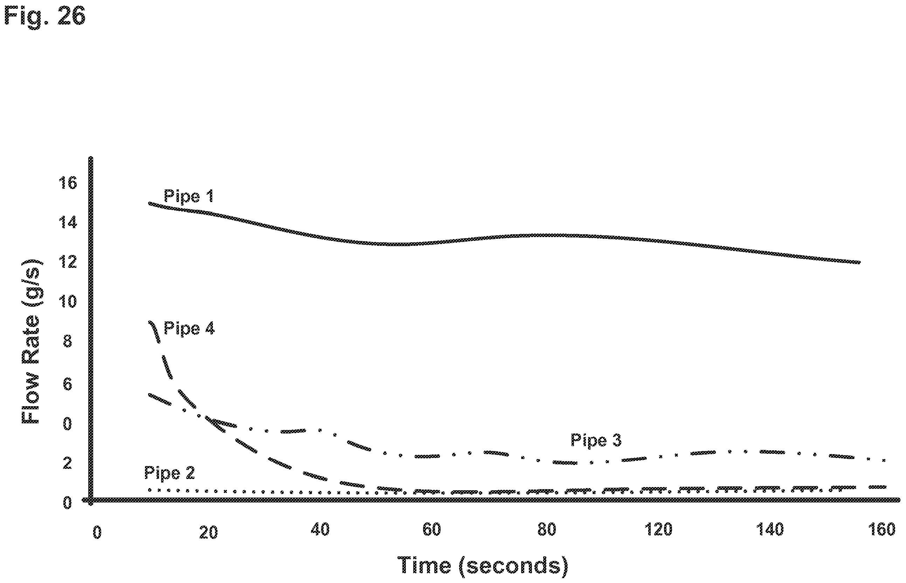

FIG. 26 shows a plot of the flow rate of a contact liquid through the pipe shown in FIGS. 24 and 25, compared with the flow rates of the contact liquid through a second pipe that does not include a liquid-impregnated surface or a reservoir, a third pipe that includes a liquid-impregnated surface but not a reservoir, and a fourth pipe that does not include a liquid impregnated surface but includes a reservoir of impregnating liquid.

## *Detailed Description*

Some known surfaces with designed chemistry and roughness, possess substantial non-wetting (hydrophobic) properties which can be extremely useful in a wide variety of commercial and technological applications. Some hydrophobic surfaces are inspired by nature, such as for example, the lotus plant which includes air pockets trapped within the micro or nano-textures of the surface, increasing the contact angle of a contact liquid (e.g., water or any other aqueous liquid) disposed on the hydrophobic surface. As long as these air pockets are stable, the surface continues to exhibit hydrophobic behavior. Such known hydrophobic surfaces that include air pockets, however, present certain limitations including, for example: i) the air pockets can be collapsed by external wetting pressures, ii) the air pockets can diffuse away into the surrounding liquid, iii) the surface can lose robustness upon damage to the texture, iv) the air pockets may be displaced by low surface tension liquids unless special texture design is implemented, and v) condensation or frost nuclei, which can form at the nanoscale throughout the texture, can completely transform the wetting properties and render the textured surface highly wetting.

Non-wetting surfaces can also be formed by disposing a liquid-impregnated surface on a substrate. Such liquid-impregnated surfaces can be nonwetting to any liquid, i.e. omniphobic (e.g. super hydrophobic, super oleophobic, or super metallophobic), can be configured to resist ice and frost formation, and can be highly durable. Liquid-impregnated surfaces can be disposed on any substrate, for example, on the inner surface of pipes, containers, or vessels, and can be configured to present a non-wetting surface to a wide variety of products, for example, food products, pharmaceuticals, over-the-counter drugs, nutraceuticals, health and beauty products, industrial greases, inks, bitumen, cement, adhesives, hazardous waste, consumer products, or any other product, such that the product can be evacuated, detached, or otherwise displaced with substantial ease on the liquid-impregnated surface.

Liquid-impregnated surfaces described herein, include impregnating liquids that are impregnated into a rough surface that includes a matrix of solid features defining interstitials regions, such that the interstitial regions include pockets of impregnating liquid. The impregnating liquid is configured to wet the solid surface preferentially and adhere to the micro-nano textured surface with strong capillary forces, such that the contact liquid has an extremely high advancing contact angle and an extremely low roll off angle (e.g., a roll off angle of about 1 degree and a contact angle of greater than about 100 degrees). This enables the contact liquid to displace with substantial ease on the liquid-impregnated surface. Therefore, the liquid-impregnated surfaces described herein, provide certain significant advantages over conventional super hydrophobic surfaces including: i) the liquid-impregnated surfaces creates a low hysteresis for the product, ii) such liquid-impregnated surfaces can include self cleaning properties, iii) can withstand high drop impact pressure (i.e., are wear resistant), iv) can self heal by capillary wicking upon damage, v) can repel a variety of contact liquids, such as semisolids, slurries, mixtures and/or non-Newtonian fluids, for example, water, edible liquids or formulations (e.g., ketchup, catsup, mustard, mayonnaise, syrup, honey, jelly, etc.), environmental fluids (e.g., sewage, rain water), bodily fluids (e.g., urine, blood, stool), or any other fluid (e.g. hair gel, toothpaste), vi) can reduce ice formation, vii) enhance condensation, viii) allow mold release, ix) prevent corrosion, x) reduce ice or gas hydrate adhesion, xi) prevent scaling from salt or mineral deposits, xii) reduce biofouling, and xiii) enhance condensation. Examples of liquid-impregnated surfaces, methods of making liquid-impregnated surfaces and applications thereof, are described in U.S. Patent No. 8,574,704, entitled "Liquid-Impregnated Surfaces, Methods of Making, and Devices Incorporating the Same," filed August 16, 2012. Examples of materials used for forming the solid features on the surface, impregnating liquids, and applications involving edible contact liquids, are described in U.S. Patent No. 8,535,779, entitled "Self-Lubricating Surfaces for Food Packaging and Food Processing Equipment," issued September 17, 2013. Examples of non-toxic liquid-impregnated surfaces are described in U.S. Provisional Application No. 61/878,481, (the '481 application) entitled "Non-toxic Liquid-Impregnated Surfaces", filed September 16, 2013.

In some cases, the impregnating liquid included in the liquid-impregnated surface can get displaced from within the interstitial regions defined by the solid features included in the liquid-impregnated surface. For example, a shear force of a bulk fluid (e.g., a non-Newtonian fluid) flowing over the liquid-impregnated surface can shear the impregnating liquid from the liquid-impregnated surface. This can lead to gradual loss of the impregnating liquid and can lead to a decrease in the non-wetting performance of the liquid-impregnated surface.

Embodiments of the liquid-impregnated surface described herein include articles, systems and methods configured to provide a replenishing supply of the impregnating liquid to the liquid-impregnated surface. This can ensure that any volume of the impregnating liquid lost from the liquid-impregnated surface is replaced with fresh impregnating liquid such that the non-wetting properties of the liquid-impregnated surface are maintained. Thus, the liquid-impregnated surfaces described herein can have enhanced durability and long lifetime. The liquid-impregnated surfaces described herein can be used in systems where a continuous flow or repeated flow of a liquid is desired over extended periods of times, for example, process tubes, pipes, conduits, vessels, multi-use containers, or any other article or container.

In some embodiments, a liquid-impregnated surface includes a first surface having a first roll off angle. A plurality of solid features are disposed on the first surface, such that interstitial regions are defined between the plurality of solid features. An impregnating liquid is disposed in the interstitial regions. The interstitial regions are dimensioned and configured such that the impregnating liquid is retained in the interstitial regions through capillarity. The impregnating liquid disposed in the interstitial regions defines a second surface which has a second roll off angle less than the first roll off angle. The apparatus also includes a liquid delivery mechanism configured to transfer the impregnating liquid to the interstitial regions

In some embodiments, an apparatus having a liquid-impregnated surface can include a first substrate having a first surface, a second surface and a plurality of pores, such that the pores extend from the first surface to the second surface. The apparatus also includes a second substrate which is spaced apart from the second surface, such that the second surface of the first substrate and the second substrate define an interior region. A plurality of solid features are disposed on the first surface of the first substrate, such that the plurality of solid features define interstitial regions between the plurality of solid features. An impregnating liquid is disposed in the interstitial regions. The interstitial regions are dimensioned and configured such that they remain impregnated by the impregnated liquid through capillarity. A supply of impregnating liquid is disposed in the interior region defined by the first surface of the first substrate and the second substrate, and is fluidically coupled to the interstitial regions by one or more pores such that the impregnating liquid can flow from the interior region to the interstitial regions the pore or pores.

In some embodiments, an apparatus can include a container having an interior-surface and an exterior surface such that the interior and the exterior surface define an interior region configured to contain a liquid. A plurality of solid features are disposed on the interior surface of the container such that the plurality of solid features define interstitial regions between the plurality of solid features. An impregnating liquid is disposed in the interstitial regions and the interstitial regions are dimensioned and configured such that capillary forces retain the impregnating liquid in the interstitial regions. A liquid mixture is disposed in the interior region and is in contact with the impregnating liquid impregnating the interstitial regions. The liquid mixture includes the impregnating liquid therein such that the liquid mixture can supply the impregnating liquid to the interstitial regions. In some embodiments, the liquid mixture is a multiphase liquid. In some embodiments, the liquid mixture is formulated such that when the temperature of the apparatus increases from a first temperature to a second temperature, the liquid mixture becomes unstable and separates into two distinct bulk phases. In some embodiments, the interior surface can have a first roll off angle, while the impregnating liquid disposed in the interstitial regions defines a contact surface which has a second roll off angle less than the first roll off angle. In some embodiments, the liquid mixture is formulated to supply impregnating liquid to the interstitial regions to maintain the second roll off angle less than the first roll off angle.

In some embodiments, a method of forming a liquid impregnated surface includes disposing a plurality of solid features on a first surface having a first roll off angle. An impregnating liquid is applied to the first surface such that the impregnating liquid fills the interstitial regions between the plurality of solid features and forms a second surface having a second roll off angle less than the first roll off angle. The method further includes reapplying the impregnating liquid to maintain the second roll off angle of the second surface less than the first roll off angle. In some embodiments, the impregnating liquid can be applied from a multi-phase liquid in contact with the impregnating liquid disposed in the interstitial regions. In some embodiments, the impregnating liquid is reapplied from a liquid delivery mechanism in fluid communication with the interstitial regions. In some embodiments, the liquid delivery mechanism is in fluid communication with the interstitial regions by at least one of the following: capillary action, pressure differential, temperature differential, concentration and/or surface tension gradients.

As used herein, the term "about" and "approximately" generally mean plus or minus 10% of the value stated, for example about 250 $\mu$m would include 225 $\mu$m to 275 $\mu$m, about 1,000 $\mu$m would include 900 $\mu$m to 1,100 $\mu$m.

As used herein, the term "contact liquid", "bulk material, and "product" are used interchangeably to refer to a solid or liquid that flows, for example a non-Newtonian fluid, a Bingham fluid, a high viscosity fluids, or a thixotropic fluid and is contact with a liquid-impregnated surface, unless otherwise stated.

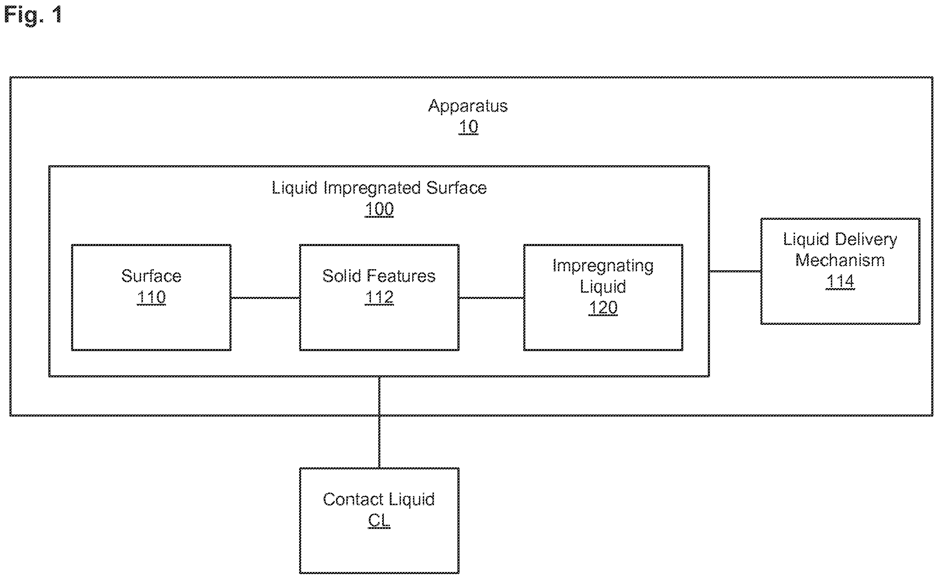

FIG. 1 illustrates a schematic block diagram of an apparatus 10 that includes a liquid-impregnated surface 100 and a liquid delivery mechanism 114. The liquid-impregnated surface includes a surface 110, a plurality of solid features 112 and an impregnating liquid 120. The impregnating liquid 120 is impregnated into the interstitial regions defined by the plurality of solid features 112. The liquid-impregnated surface can be in contact with a contact liquid CL, such that the contact liquid CL can easily move over the liquid-impregnated surface 100. The liquid delivery mechanism 114 is configured to transfer the impregnating liquid to the interstitial regions, as described herein.

The surface 110 can be any surface, which is configured to contact a contact liquid. For example, in some embodiments, the surface 110 can be an inner surface of a container and can have a first roll off angle, for example, a roll off angle of a contact liquid CL (for example, a consumer product, laundry detergent, cough syrup, an edible contact liquid, an industrial liquid, or any other contact liquid described herein). The surface 110 can be a flat surface, for example an inner surface of a prismatic container, silicon wafer, glass wafer, a table top, a wall, a wind shield, a ski goggle screen, or a contoured surface, for example, a container (e.g. a beverage container), a propeller, a pipe, an inner surface, of a circular, oblong, rectangular, elliptical, oval or otherwise contoured container.

In some embodiments, the surface 110 can be an inner surface of a container. The container can include any suitable container such as, for example, tubes, bottles, vials, flasks, molds, jars, tubs, cups, caps, glasses, pitchers, barrels, bins, totes, tanks, kegs, tubs, syringes, tins, pouches, lined boxes, hoses, cylinders, and cans. In such embodiment, the container can be constructed in almost any desirable shape. The container can be constructed of rigid or flexible materials. Foil-lined or polymer-lined cardboard or paper boxes can also be used to form the container. In some embodiments, the surface 110 can include a surface of hoses, piping, conduit, nozzles, syringe needles, dispensing tips, lids, pumps, and other surfaces for containing, transporting, or dispensing the contact liquid CL. The surface 110 can be formed from any suitable material including, for example plastic, glass, metal, alloys, ceramics, coated fibers, any other material, or combinations thereof. Suitable surfaces can include, for example, polystyrene, nylon, polypropylene, wax, fluorinated wax, natural waxes, siliconyl waxes, polyethylene terephthalate, polypropylene, poly propylene carbonate, poly imide, polyethylene, polyurethane, graphene, polysulphone, polyethersulfone, polytetrafluoroethylene (PTFE), tetrafluoroethylene (TFE), fluorinated ethylenepropylene copolymer (FEP), polyvinylidene fluoride (PVDF), perfluoroalkoxytetrafluoroethylene copolymer (PFA), perfluoromethyl vinylether copolymer (MFA), ethylenechlorotrifluoroethylene copolymer (ECTFE), ethylene-tetrafluoroethylene copolymer (ETFE), perfluoropolyether(PFPE), polychlorotetrafluoroethylene (PCTFE), polyvinyl alcohol (PVA), polyvinyl acetate (PVAc), polyethyleneglycol (PEG), Polyvinylpyrrolidone (PVP), Polylactic acid (PLA), Acrylonitrile butadiene styrene (ABS), Tecnoflon cellulose acetate, poly(acrylic acid), poly(propylene oxide), Dsorbitol, erythritol, xylitol, lactitol, maltitol, mannitol, and polycarbonate.

A plurality of solid features 112 are disposed on the surface 110, such that the plurality of solid features 112 define interstitial regions between the plurality of solid features 112. In some embodiments, the solid features 112 can be posts, spheres, micro/nano needles, nanograss, pores, cavities, interconnected pores, inter connected cavities, any other random geometry that provides a micro and/or nano surface roughness. In some embodiments, the height of the solid features can be about 10 $\mu$m, 20 $\mu$m, 30 $\mu$m, 40 $\mu$m, 50 $\mu$m, 60 $\mu$m, 70 $\mu$m, 80 $\mu$m, 90 $\mu$m, 100 $\mu$m, 200 $\mu$m, 300 $\mu$m, 400 $\mu$m, 500 $\mu$m, 600 $\mu$m, 700 $\mu$m, 800 $\mu$m, 900 $\mu$m, up to about 1 mm, inclusive of all ranges therebetween, or any other suitable height for receiving the impregnating liquid 120. In some embodiments, the height of the solids features 112 can be less than about 1 $\mu$m. For example, in some embodiments, the solid features 112 can have a height of about 1 nm, 5 nm, 10 nm, 20 nm, 30 nm 40 nm, 50 nm, 100 nm, 200 nm, 300 nm, 400 nm, 500 nm, 600 nm, 700 nm, 800 nm, 900 nm, or about 1,000 nm, inclusive of all ranges therebetween. Furthermore, the height of solid features 112 can be, for example, substantially uniform. In some embodiments, the solid features can have a wenzel roughness "r" greater than about 1.01, 1.05, 1.1, 1.2, 1.3, 1.4, 1.5, 1.6, 1.7, 1.8, 1.9, 2.0, 2.5, 3, 5, or about 10. In some embodiments, the solid features 112 can have an interstitial spacing, for example, in the range of about 1 $\mu$m to about 100 $\mu$m, or about 1 nm to about 1 $\mu$m. In some embodiments, the textured surface 110 can have hierarchical features, for example, micro-scale features that further include nano-scale features thereupon. In some embodiments, the surface 110 can be isotropic. In some embodiments, the surface 110 can be anisotropic.

The solid features 112 can be disposed on the surface 110 using any suitable process. For example, in some embodiments, a top down fabrication process can be used to form the solid features 112 on the surface 110. For example, micro and/or nano-lithography (e.g., photolithography, SU-8 masks, nano imprinting, hard masking, shadow photolithography, etc.) can be used to define the solid features 112 on the surface 110, for example, silicon, glass, chromium, gold, PDMS, parylene, or any other suitable surface. In some embodiments, the micro and/or nano patterns can be used as the features of the solid features 112. In some embodiments, the micro and/or nano-patterns can be used as masks for further etching of the surface 110, for example, wet chemical etching (e.g., using buffered hydrofluoric acid, gold etchant, chromium etchant), or dry etching (e.g., reactive ion etching, deep reactive ion etching, $SF_6$ etching, electron beam lithography, plasma beam lithography, etc.). In some embodiments, the solid features 112 can be grown in-situ on the surface, for example, using atomic layer deposition (ALD), sputtering, e-beam deposition, chemical vapor deposition, plasma enhanced chemical vapor deposition, and the likes.

In some embodiments, the solid features 112 can be disposed on the inner surface of a container (e.g., any of the containers described herein) or be integral to the surface itself (e.g., the textures of a polycarbonate bottle may be made of polycarbonate). In some embodiments, the solid features 112 may be formed of a collection or coating of particles including, but not limited to insoluble fibers (e.g., purified wood cellulose, micro-crystalline cellulose, and/or oat bran fiber), wax (e.g., carnauba wax, Japan wax, beeswax, candelilla wax, rice bran wax), shellac, fluorinated waxes, siliconyl waxes, other polysaccharides, fructo-oligosaccharides, metal oxides, montan wax, lignite and peat, ozokerite, ceresins, bitumens, petrolatuns, paraffins, microcrystalline wax, lanolin, esters of metal or alkali, flour of coconut, almond, potato, wheat, pulp, zein, dextrin, cellulose ethers (e.g., Hydroxyethyl cellulose, Hydroxypropyl cellulose (HPC), Hydroxyethyl methyl cellulose, Hydroxypropyl methyl cellulose (HPMC), Ethyl hydroxyethyl cellulose), ferric oxide, ferrous oxide, silicas, clay minerals, bentonite, palygorskite, kaolinite, vermiculite, apatite, graphite, molybdenum disulfide, mica, boron nitride, sodium formate, sodium oleate, sodium palmitate, sodium sulfate, sodium alginate, agar, gelatin, pectin, gluten, starch alginate, carrageenan, whey and/or any other edible solid particles described herein or any combination thereof.

In some embodiments, surface energy of the surface 110 and/or the solid features 112 can be modified, for example, to enhance the adhesion of the solid features 112 to the surface 110 or to enhance the adhesion of the impregnating liquid 120 to the solid features 112 and/or the surface 110. Such surface modification processes can include, for example, sputter coating, silane treatment, fluoro-polymer treatment, anodization, passivation, chemical vapor deposition, physical vapor deposition, oxygen plasma treatment, electric arc treatment, thermal treatment, any other suitable surface chemistry modification process or combination thereof.

In some embodiments, the solid features 112 can be disposed by exposing the surface 110 (e.g., polycarbonate) to a solvent (e.g., acetone). For example, the solvent may impart texture by inducing crystallization (e.g., polycarbonate may recrystallize when exposed to acetone). In some embodiments, the solid features 112 can be disposed by dissolving, etching, melting, reacting, treating, or spraying on a foam or aerated solution, exposing the surface to electromagnetic waves such as, for example ultraviolet (UV) light or microwaves, or evaporating away a portion of a surface, leaving a textured, porous, and/or rough surface behind that includes a plurality of the solid features 112. In some embodiments, the solid features 112 can be defined by mechanical roughening (e.g., tumbling with an abrasive, sandblasting, sanding), spray-coating or polymer spinning, plasma spraying, thermal spraying, deposition of particles from solution (e.g., layer-by-layer deposition, evaporating away liquid from a liquid/particle suspension contacting the surface), and/or extrusion or blow-molding of a foam, or foam-forming material (for example a polyurethane foam). In some embodiments, the solid features 112 can also be formed by deposition of a polymer from a solution (e.g., the polymer forms a rough, porous, or textured surface); extrusion or blow-molding of a material that expands upon cooling, leaving a wrinkled surface; and application of a layer of a material onto a surface that is under tension or compression, and subsequently relaxing the tension or compression of surface beneath, resulting in a textured surface.

In some embodiments, the solid features 112 can be formed by disposing a material, for example, a porous media on the surface capable of forming a layer of the material on the surface that includes pores of different sizes, and/or self-assembles on the surface 110. For example, in some embodiments, the solid features 112 are disposed through non-solvent induced phase separation of a polymer, resulting in a sponge-like porous structure. This can include, for example, a solution of polysulfone, poly(vinylpyrrolidone), and DMAc may be cast onto a substrate and then immersed in a bath of water. Upon immersion in water, the solvent and non-solvent exchange, and the polysulfone precipitates and hardens. The material can be disposed on the surface 110 by any suitable method, for example, spray coating, immersion (dip) coating, vapor deposition, pouring and/or any other suitable method to form the textured surface 110.

The solid features 112 can include micro-scale features such as, for example posts, pillars, spheres, nano-needles, pores, cavities, interconnected pores, grooves, ridges, spikes, peaks, interconnected cavities, bumps, mounds, particles, particle agglomerations, or any other random geometry that provides a micro and/or nano surface roughness. In some embodiments, the solid features 112 can include particles that have micro-scale or nano-scale dimensions which can be randomly or uniformly dispersed on a surface. Characteristic spacing between the solid features 112 can be about 1 mm, about 900 $\mu$m, about 800 $\mu$m, about 700 $\mu$m, about 600 $\mu$m, about 500 $\mu$m, about 400, $\mu$m, about 300 $\mu$m, about 200 $\mu$m, about 100 $\mu$m, about 90 $\mu$m, about 80 $\mu$m, about 70 $\mu$m, about 60 $\mu$m, about 50 $\mu$m, about 40 $\mu$m, about 30 $\mu$m, about 20 $\mu$m, about 10 $\mu$m, about 5 $\mu$m, 1 $\mu$m, or 100 nm, about 90 nm, about 80 nm, about 70 nm, about 60 nm, about 50 nm, about 40 nm, about 30 nm, about 20 nm, about 10 nm, or about 1 nm. In some embodiments, characteristic spacing between the solid features 112 can be in the range of about 100 $\mu$m to about 100 nm, about 30 $\mu$m to about 1 $\mu$m, or about 10 $\mu$m to about 1 $\mu$m. In some embodiments, characteristic spacing between solid features 112 can be in the range of about 100 $\mu$m to about 80 $\mu$m, about 80 $\mu$m to about 50 $\mu$m, about 50 $\mu$m to about 30 $\mu$m, about 30 $\mu$m to about 10 $\mu$m, about 10 $\mu$m to about 1 $\mu$m, about 1 $\mu$m to about 90 nm, about 90 nm to about 70 nm, about 70 nm to about 50 nm, about 50 nm to about 30 nm, about 30 nm, to about 10nm, or about 10 nm to about 1 nm, inclusive of all ranges therebetween.

In some embodiments, the solid features 112, for example solid particles can have an average dimension of about 200 $\mu$m, about 100 $\mu$m, about 90 $\mu$m, about 80 $\mu$m, about 70 $\mu$m, about 60 $\mu$m, about 50 $\mu$m, about 40 $\mu$m, about 30 $\mu$m, about 20 $\mu$m, about 10 $\mu$m, about 5 $\mu$m, 1 $\mu$m, about 100 nm, about 90 nm, about 80 nm, about 70 nm, about 60 nm, about 50 nm, about 40 nm, about 30 nm, about 20 nm, about 10 nm, or about 1 nm. In some embodiments, the average dimension of the solid features 112 can be in the range of about 100 $\mu$m to about 100 nm, about 30 $\mu$m to about 10 $\mu$m, or about 20 $\mu$m to about 1 $\mu$m. In some embodiments, the average dimension of the solid feature 112 can be in the range of about 100 p,m to about 80 $\mu$m, about 80 $\mu$m to about 50 $\mu$m, about 50 $\mu$m to about 30 $\mu$m, or about 30 $\mu$m to about 10 $\mu$m, or 10 $\mu$m to about 1 $\mu$m, about 1 $\mu$m to about 90 nm, about 90 nm to about 70 nm, about 70 nm to about 50 nm, about 50 nm to about 30 nm, about 30 nm, to about 10nm, or about 10 nm to about 1 nm, inclusive of all ranges therebetween. In some embodiments, the height of the solid features 112 can be substantially uniform. In some embodiments, the surface 110 can have hierarchical features. For example the solid features can include micro-scale features that further include nano-scale features disposed thereupon.

In some embodiments, the solid features 112 (e.g., particles) can be porous. Characteristic pore size (e.g., pore widths or lengths) of particles can be about 5,000 nm, about 3,000 nm, about 2,000 nm, about 1,000 nm, about 500 nm, about 400 nm, about 300 nm, about 200 nm, about 100 nm, about 80 nm, about 50 nm, about 10 nm, or about 1nm inclusive of all ranges therebetween. In some embodiments, characteristic pore size can be in the range of about 200 nm to about 2 $\mu$m, or about 10 nm to about 1 $\mu$m inclusive of all ranges therebetween. Controlling the pore size, the length of pores, and the number of pores can allow for greater control of the impregnating liquid flow rates, product flow rates, and overall material yield.

The impregnating liquid 120 is disposed on the surface 110 such that the impregnating liquid 120 impregnates the interstitial regions defined by the plurality of solid features 112, for example, pores, cavities, or otherwise inter-feature spacing defined by the surface 110 such that no air remains in the interstitial regions. The interstitial regions can be dimensioned and configured such that the surface remains impregnated by impregnating liquid 120 through capillarity. The impregnating liquid 120 disposed in the interstitial regions of the plurality of solid features 112 is configured to define a second roll off angle less than the first roll of angle (i.e., the roll of angle of the unmodified surface 110. In some embodiments, the impregnating liquid 120 can have a viscosity at room temperature of less than about 1,000 cP, for example about 1 cP, 10 cP, 20 cP, 50 cP, about 100 cP, about 150 cP, about 200 cP, about 300 cP, about 400 cP, about 500 cP, about 600 cP, about 700 cP, about 800 cP, about 900 cP, or about 1,000 cP, inclusive of all ranges therebetween. In some embodiments, the impregnating liquid 120 can have viscosity of less than about 1 cP, for example, about 0.1 cP, 0.2 cP, 0.3 cP, 0.4 cP, 0.5 cP, 0.6 cP, 0.7 cP, 0.8 cP, 0.9 cP, or about 0.99 cP, inclusive of all ranges therebetween. In some embodiments, the impregnating liquid 120 can fill the interstitial regions defined by the solid features 112 such that the impregnating liquid 120 forms a layer at least about 5 nm thick above the plurality of solid features 112 disposed on the surface 110. In some embodiments, the impregnating liquid 120 forms a layer at least about 100 nm thick above the plurality of solid features 112 disposed on the surface 110. In some embodiments, the impregnating liquid 120 forms a layer at least about 1 um thick above the plurality of solid features 112 disposed on the surface 110. In some embodiments the plurality of solid features can have an average roughness, Ra, less than 0.8 um, for example, in compliance with the rules and regulations of a regulatory body (e.g., the Food and Drug Administration (FDA)).

The impregnating liquid 120 may be disposed in the interstitial spaces defined by the solid features 112 using any suitable means. For example, the impregnating liquid 120 can be sprayed (e.g., air spray, thermal spray, plasma spray) or brushed onto the textured surface 110 (e.g., a texture on an inner surface of a bottle). In some embodiments, the impregnating liquid 120 can be applied to the textured surface 110 by filling or partially filling a container that includes the textured surface 110. The excess impregnating liquid 120 is then removed from the container. In some embodiments, the excess impregnating liquid 120 can be removed by adding a wash liquid (e.g., water, surfactants, acids, bases, solvents, etc.), or a heated wash liquid to the container to collect or extract the excess liquid from the container. In some embodiments, the excess impregnating liquid may be mechanically removed (e.g., pushed off the surface with a solid object or fluid), absorbed off of the surface 110 using another porous material, or removed via gravity or centrifugal forces. In some embodiments, the impregnating liquid 120 can be disposed by spinning the surface 110 (e.g., a container) in contact with the liquid (e.g., a spin coating process), and condensing the impregnating liquid 120 onto the surface 110. In some embodiments, the impregnating liquid 120 is applied by depositing a solution with the impregnating liquid and one or more volatile liquids (e.g., via any of the previously described methods) and evaporating away the one or more volatile liquids. In some embodiments, the solid materials may be removed in a wash process, and reapplied after the wash process.

In some embodiments, the impregnating liquid 120 can be applied using a spreading liquid that spreads or pushes the impregnating liquid along the surface 110. For example, the impregnating liquid 120 (e.g., ethyl oleate) and spreading liquid (e.g., water) may be combined in a container and agitated or stirred. The fluid flow within the container may distribute the impregnating liquid 120 around the container as it impregnates the solid features 112.

In some embodiments, the impregnating liquid 120 included in the liquid-impregnated surface 100, or impregnating liquid communicated to the liquid-impregnated surface, for example, from the liquid delivery mechanism 114, can be saturated with the solid features 112 (e.g., any of the solid features described herein) such that the solid features 112 do not dissolve into the impregnating liquid 120.

In some embodiments, the impregnating liquid 120 can include, silicone oil, a perfluorocarbon liquid, halogenated vacuum oil, greases, lubricants, (such as Krytox 1506 or Fromblin 06/6), a fluorinated coolant (e.g., perfluoro-tripentylamine sold as FC-70, manufactured by 3M), a high temperature heat transfer fluid (e.g. Galden HT 200 or Galden HT 270, Novec fluids, etc.), an ionic liquid, a fluorinated ionic liquid that is immiscible with water, a silicone oil comprising PDMS, a fluorinated silicone oil such as, for example polyfluorosiloxane, or polyorganosiloxanes, a liquid metal, a synthetic oil, a vegetable oil, derivative of a vegetable oil, a mono- di- or triglyceride, an electro-rheological fluid, a magneto-rheological fluid, a ferro-fluid, a dielectric liquid, a hydrocarbon liquid such as mineral oil, polyalphaolefins (PAO), fluorinated glycine, fluorinated ethers, or other synthetic hydrocarbon co-oligomers, a fluorocarbon liquid, for example, polyphenyl ether (PPE), perfluoropolyether (PFPE), or perfluoroalkanes, a refrigerant, a vacuum oil, a phase-change material, a semi-liquid, polyalkylene glycol, esters of saturated fatty and dibasic acids, polyurea, grease, synovial fluid, bodily fluid, or any other aqueous fluid or any other impregnating liquid described herein. In some embodiments, the impregnating liquid 120 can include an ionic liquid. Such ionic impregnating liquids can include, for example, tetrachloroethylene (perchloroethylene), phenyl isothiocyanate (phenyl mustard oil), bromo benzene, iodobenzene, obromotoluene, alpha-chloronaphthalene, alpha-bromonaphthalene, acetylene tetrabromide, 1-butyl-3-methylimidazolium bis(trifluoromethylsulfonyl) imide (BMim), tribromohydrin (1,2,3-tribromopropane), tetradecane, cyclohexane, ethylene dibromide, carbon disulfide, bromoform, methylene iodide (diiodomethane), stanolax, Squibb's liquid petrolatum, p-bromotoluene, monobromobenzene, perchloroethylene, MCT oil, carbon disulfide, phenyl mustard oil, monoiodobenzene, triacetin, triglyceride of citric acid, alpha-monochloro-naphthalene, acetylene tetrabromide, aniline, butyl alcohol, isoamyl alcohol, n-heptyl alcohol, cresol, oleic acid, linoleic acid, amyl phthalate, any other ionic liquid and any combination thereof..

In some embodiments, the liquid-impregnated surface 100 can include non-toxic materials, for example impregnating liquid 120 and/or solid 112 (e.g., solid particles used to form solid features such as, for example, wax) which are non-toxic to humans and/or animals. Such non-toxic liquid-impregnated surfaces can thereby be disposed on surfaces, for example the interior surface of containers, which are configured to house products formulated for human use or consumption. Such products can include, for example food products, drugs (e.g., FDA approved drugs), or health and beauty products.

In some embodiments, any solvents used in the processing of any components of the liquid-impregnated surface 100, for example the solid surface, may remain in the liquid-impregnated surface in some concentration, and thus the solvents can also be chosen to be non-toxic. Examples of solvents that are nontoxic in residual quantities include ethyl acetate, ethanol, or any other non-toxic solvent.

The non-toxicity requirements can vary depending upon the intended use of the product in contact with the liquid-impregnated surface. For example, liquid-impregnated surfaces configured to be used with food products or products classified as drugs would be required to have a much higher level of non-toxicity when compared with products meant to contact only the oral mucosa (e.g., toothpaste, mouth wash, etc.), or applied topically such as, for example, health and beauty products (e.g., hair gel, shampoo, cosmetics, etc.).

In some embodiments, the liquid-impregnated surface 100 can include materials that are a U.S. Food and Drug Administration (FDA) approved direct or indirect food additive, an FDA approved food contact substance, satisfy FDA regulatory requirements to be used as a food additive or food contact substance, and/or is an FDA GRAS material. Examples of such materials can be found within the FDA Code of Federal Regulations Title 21, located at *"http://www.accessdata.fda.gov/scripts/cdrh/cfdocs/cfcfr/cfrsearch.cfm.* In some embodiments, the components of the liquid-impregnated surface 100, for example the impregnating liquid can exist as a component of the food product disposed within the container. In some embodiments, the components of the liquid-impregnated surface 100 can include a dietary supplement or ingredient of a dietary supplement. The components of the liquid-impregnated surface 100 can also include an FDA approved food additive or color additive. In some embodiments, the liquid-impregnated surface 10 can include materials that exist naturally in, or are derived from plants and animals. In some embodiments, the liquid-impregnated surface 100 for use with food products includes solids or impregnating liquid that is flavorless or have a high flavor threshold of below 500 ppm, are odorless or have high odor threshold, and/or are substantially transparent.

In some embodiments, the materials included in the liquid-impregnated surface 100 can include an FDA approved drug ingredient, for example any ingredient included in the FDA's database of approved drugs, "http://www.accessdata.fda.gov/scripts/cder/drugsatfda/index.cfm. In some embodiments, the liquid-impregnated surface 100 can include materials that satisfy FDA requirements to be used in drugs or are listed within the FDA's National Drug Discovery Code Directory, "http://www.accessdata.fda.gov/scripts/cder/ndc/default.cfm. In some embodiments, the materials can include inactive drug ingredient of an approved drug product as listed within FDA's database, "http://www.accessdata.fda.gov/scripts/cder/ndc/default.cfm. In some embodiments, the materials can include any materials that satisfy the requirement of materials that can be used in liquid-impregnated surfaces configured to be used with food products, and/or include a dietary supplement or ingredient of a dietary supplement.

In such embodiments, the liquid-impregnated surface 100 can include materials which are FDA approved and satisfies FDA drug requirements as are listed within the FDA's National Drug Discovery Code Directory and can also include FDA approved health and beauty ingredient, that satisfy FDA requirements to be used in health and beauty products, satisfies FDA regulatory laws included in the Federal Food, Drug and Cosmetic Act (FD&C Act), or the Fair Packaging and Labeling Act (FPLA).

In some embodiments, the liquid-impregnated surface 100 can include materials that are an FDA approved health and beauty ingredient, that satisfies FDA requirements to be used in health and beauty products, satisfies FDA regulatory laws included in the Federal Food, Drug and Cosmetic Act (FD&C Act), or the Fair Packaging and Labeling Act (FPLA). In some embodiments, the materials can include a flavor or a fragrance.

In some embodiments, the materials included in the liquid-impregnated surfaces 100 described can be flavorless or have high flavor thresholds below 500 ppm, and can be odorless or have a high odor threshold. In some embodiments the materials included in the liquid-impregnated surface 100 can be substantially transparent. For example, the solid features 112 or impregnating liquid 120 can be selected so that they have substantially the same or similar indices of refraction. By matching their indices of refraction, they may be optically matched to reduce light scattering and improve light transmission. For example, by utilizing materials that have similar indices of refraction and have a clear, transparent property, a surface having substantially transparent characteristics can be formed. In some embodiments, the materials included in the liquid-impregnated surface 100 are organic or derived from organically grown products. In some embodiments, the impregnating liquid 120 can include one or more additives. The additive can be configured, for example, to reduce the viscosity, vapor pressure, or solubility of the impregnating liquid. In some embodiments, the additive can be configured to increase the chemical stability of the liquid-impregnated surface, for example the additive can be an anti-oxidant configured to inhibit oxidation of the liquid-impregnated surface. In some embodiments the additive can be added to reduce or increase the freezing point of the liquid. In some embodiments, the additive can be configured to reduce the diffusivity of oxygen or $CO_2$ through the liquid-impregnated surface or enable the liquid-impregnated surface to absorb more ultra violet (UV) light, for example protect the product (e.g., any of the products described herein), disposed within a container on which the non-toxic liquid-impregnated surface is disposed. In some embodiments, the additive can be configured to provide an intentional odor, for example a fragrance (e.g., smell of flowers, fruits, plants, freshness, scents, etc.). In some embodiments, the additive can be configured to provide color to the liquid-impregnated surface and can include, for example a dye, or an FDA approved color additive. In some embodiments, the non-toxic liquid-impregnated surface includes an additive that can be released into the product, for example, a flavor or a preservative.

In some embodiments, the materials included in any of the liquid-impregnated surface 100 can be organic or derived from organically grown products. For example, the impregnating liquid 120 can include organic liquids that are often or sometimes non-toxic. Such organic liquids can, for example, include materials that fall within the following classes; lipids, vegetable oils (e.g., olive oil, light olive oil, corn oil, soybean oil, rapeseed oil, linseed oil, grapeseed oil, flaxseed oil, peanut oil, safflower oil, palm oil, coconut oil, or sunflower oil), fats, fatty acids, derivatives of vegetable oils or fatty acids, esters, terpenes, monoglycerides, diglycerides, triglycerides, alcohols, and fatty acid alcohols. Examples of vegetable oils suitable for use as impregnating liquid 120 are described in Gunstone, F., "Vegetable Oils in Food Technology: Composition, Properties and Uses: 2nd Ed.", Wiley, John and Sons Inc., Pub. May 2011.

In some embodiments, the liquid-impregnated surface '00 described herein can include organic solids and/or liquids that are non-toxic and fall within the following classes; lipids, waxes, fats, fibers, cellulose, derivatives of vegetable oils, esters (such as esters of fatty acids), terpenes, monoglycerides, diglycerides, triglycerides, alcohols, fatty acid alcohols, ketones, aldehydes, proteins, sugars, salts, minerals, vitamins, carbonate, ceramic materials, alkanes, alkenes, alkynes, acyl halides, carbonates, carboxylates, carboxylic acids, methoxies, hydroperoxides, peroxides, ethers, hemiacetals, hemiaketals, acetals, ketals, orthoesters, orthocarbonate esters, phospholipids, lecithins, any other organic material or any combination thereof. In some embodiments, any of the non-toxic liquid-impregnated surfaces described herein can include non-toxic materials that are boron, phosphorous, or sulfur containing compound. Some examples of food-safe impregnating liquids are MCT (medium chain triglyceride) oil, ethyl oleate, methyl laurate, propylene glycol dicaprylate/dicaprate, or vegetable oil, glycerine, squalene. In some embodiments, any of the non-toxic liquid-impregnated surfaces can include inorganic materials, for example ceramics, metals, metal oxides, silica, glass, plastics, any other inorganic material or combination thereof. In some embodiments, any of the non-toxic liquid-impregnated surfaces described herein can include, for example preservatives, sweeteners, color additives, flavors, spices, flavor enhancers, fat replacers, and components of formulations used to replace fats, nutrients, emulsifiers, surfactants, bulking agents, cleansing agents, depilatories, stabilizers, emulsion stabilizers, thickeners, flavor or fragrance, an ingredient of a flavor or fragrance, binders, texturizers, humectants, pH control agents, acidulants, leavening agents, anti-caking agents, anti-dandruff agents, anti-microbial agents, anti-perspirants, anti-seborrheic agents, astringents, bleaching agents, denaturants, depilatories, emollients, foaming agents, hair conditioning agents, hair fixing agents, hair waving agents, absorbents, anti-corrosive agents, anti-foaming agents, anti-oxidants, anti-plaque agents, anti-static agents, binding agents, buffering agents, chelating agents, cosmetic colorants, deodorants, detangling agents, emulsifying agents, film formers, foam boosting agents, gel forming agents, hair dyeing agents, hair straightening agents, keratolytics, moisturizing agents, oral care agents, pearlescent agents, plasticizers, refatting agents, skin conditioning agents, smoothing agents, soothing agents, tonics, and/or UV filters.

In some embodiments, the liquid-impregnated surface 100 can include non-toxic materials having an average molecular weight in the range of about 100 g/mol to about 600 g/mol. which are included in the Springer Material Landolt-Bornstein database located at, "http://www.springermaterials.com/docs/index.html", or in the MatNavi database located at "www.mits.nims.go.jp/index_en.html". In some embodiments, the impregnating liquid 120 can have a boiling point greater than 150 °C or preferably 250°C, such that the impregnating liquid 120 is not classified as volatile organic compounds (VOC's). In some embodiments, the impregnating liquid 120 can have a density which is substantially equal to the density of the product.

The ratio of the solid features 112 (e.g., particles) to the impregnating liquid 120, can be configured to ensure that little or no portion of the solid features 112 protrude above the impregnating liquid-contact liquid interface. For example, in some embodiments, a ratio of the solid features 112 to the impregnating liquid 120 on the surface 110 can be less than about 15%, or less than about 5%. In some embodiments, the ratio of the solid features 112 to the projected area of the liquid-impregnating liquid 120 can be less than about 50%, about 45%, about 40%, about 35%, about 30%, about 25%, about 20%, about 15%, about 10%, about 5%, or less than about 2%. In some embodiments, the ratio of the solid features 112 to the impregnating liquid 120 can be in the range of about 5% to about 50%, about 10% to about 30%, or about 15% to about 20%, inclusive of all ranges therebetween. In some embodiments, a low ratio can be achieved using surface textures that are substantially pointed, caved, or are rounded. By contrast, surface textures that are flat may result in higher ratios, with too much solid material exposed at the surface.

In some embodiments, the liquid-impregnated surface 100 can have an "emerged area fraction" $\phi$, which is defined as a representative fraction of the projected surface area of the liquid-impregnated surface 112, corresponding to non-submerged solid (non-submerged by the impregnating liquid. This portion can be in contact with a contact liquid) at room temperature, of less than about 0.50, about 0.50, about 0.30, about 0.25, about 0.20, about 0.15, about 0.10, about 0.05, about 0.01, or less than about 0.005. In some embodiments, $\phi$ can be greater than about 0.001, about 0.005, about 0.01, about 0.05, about 0.10, about 0.15, or greater than about 0.20. In some embodiments, $\phi$ can be in the range of about 0 to about 0.25. In some embodiments, $\phi$ can be in the range of about 0 to about 0.01. In some embodiments, $\phi$ can be in the range of about 0.001 to about 0.25. In some embodiments, $\phi$ can be in the range of about 0.001 to about 0.10.

In some embodiments, the liquid-impregnated surface 100 can have a spreading coefficient $S_{oe(v)} < 0$, where $S_{oe(v)}$ is spreading coefficient, defined as $\gamma_{ev} - \gamma_{eo} - \gamma_{ov}$, where $\gamma$ is the interfacial tension between the two phases designated by subscripts, said subscripts selected from e, v, and o, where e is a non-vapor phase (e.g., liquid or semi-solid) external to the surface and different from the impregnating liquid, v is vapor phase external to the surface (e.g., air), and o is the impregnating liquid.

In some embodiments, the solid features 112 provide stable impregnation of the impregnating liquid 120 therebetween or therewithin, such that $\theta_{os(v)}$, receding $< \theta_c$. where $\theta_c$ is critical contact angle. In some embodiments, the solid features 112 can provide stable impregnation of the impregnating liquid 120 therebetween or therewithin, such that: (i) $\theta_{os(w),receding} = 0$; and/or (ii) $\theta_{os(v),receding} = 0$ and $\theta_{os(w),receding} = 0$, where $\theta_{os(w),receding}$ is receding contact angle of the impregnating liquid 120 (e.g., oil, subscript 'o') on the surface 100 (subscript 's') in the presence of water (subscript 'w'), and where $\theta_{os(v),receding}$ is receding contact angle of the impregnating liquid 120 (e.g., oil, subscript 'o') on the surface 100 (subscript's') in the presence of vapor phase (subscript 'v', e.g., air). In some embodiments, the solid features 112 provide stable impregnation of the impregnating liquid 120 therebetween or therewithin, such that: (i) $\theta_{os(v), receding} > 0$; and/or (ii) $\theta_{os(w)}$, receding > 0, where $\theta_{os(v),receding}$ is receding contact angle of the impregnating liquid 120 (e.g., oil, subscript 'o') on the surface 100 (subscript 's') in the presence of vapor phase (subscript 'v', e.g., air), and where $\theta_{os(w),receding}$ is receding contact angle of the impregnating liquid 120 (e.g., oil, subscript 'o') on the surface 100 (subscript 's') in the presence of water (subscript 'w'). In some embodiments, both $\theta_{os(v), receding} > 0$ and $\theta_{os(w), receding} > 0$. In some embodiments, the solid features 112 provide stable impregnation of the impregnating liquid 120 therebetween or therewithin, such that: (i) $\theta_{os(v),receding} < \theta c$; and/or (ii) $\theta_{os(w),receding} < \theta_c$, where $\theta_c$ is critical contact angle. In some embodiments, the solid features 112 provide stable impregnation of the impregnating liquid 120 therebetween or therewithin, such that: (i) $\theta_{os(v),receding} < \theta^*_c$; and/or (ii) $\theta_{os(w),receding} < \theta^*_c$, where $\theta^*_c = \cos^{-1}(1/r)$, and where r is roughness of the solid portion of the surface 100.

In some embodiments, the solid features 112 provide stable impregnation of the impregnating liquid 120 therebetween or therewithin, such that $\theta_{os(v)}$, receding $< \theta_c$. where $\theta_c$ is critical contact angle. In some embodiments, the solid features 112 can provide stable impregnation of the impregnating liquid 120 therebetween or therewithin, such that: (i) $\theta_{os(e),receding} = 0$; and/or (ii) $\theta_{os(v),receding} = 0$ and $\theta_{os(e),receding} = 0$, where $\theta_{os(e),receding}$ is receding contact angle of the impregnating liquid 120 (e.g., oil, subscript 'o') on the surface 100 (subscript 's') in the presence of the contact liquid CL (subscript 'e'), and where $\theta_{os(v),receding}$ is receding contact angle of the impregnating liquid 120 (e.g., oil, subscript 'o') on the surface 100 (subscript 's') in the presence of vapor phase (subscript 'v', e.g., air). In some embodiments, the solid features 112 provide stable impregnation of the impregnating liquid 120 therebetween or therewithin, such that: (i) $\theta_{os(v), receding} > 0$; and/or (ii) $\theta_{os(e), receding} > 0$, where $\theta_{os(v),receding}$ is receding contact angle of the impregnating liquid 120 (e.g., oil, subscript 'o') on the surface 100 (subscript's') in the presence of vapor phase (subscript 'v', e.g., air), and where $\theta_{os(w),receding}$ is receding contact angle of the impregnating liquid 120 (e.g., oil, subscript 'o') on the surface 100 (subscript 's') in the presence of the contact liquid CL (subscript 'e'). In some embodiments, both $\theta_{os(v), receding} > 0$ and $\theta_{os(e), receding} > 0$. In some embodiments, the solid features 112 provide stable impregnation of the impregnating liquid 120 therebetween or therewithin, such that: (i) $\theta_{os(v),receding} < \theta_c$; and/or (ii) $\theta_{os(e),receding} < \theta_c$, where

$\theta_c$ is critical contact angle. In some embodiments, the solid features 112 provide stable impregnation of the impregnating liquid 120 therebetween or therewithin, such that: (i) $\theta_{os(v),receding} < \theta^*_c$; and/or (ii) $\theta_{os(e),receding} < \theta^*_c$, where $\theta^*_c = \cos^{-1}(1/r)$, and where r is roughness of the solid portion of the surface 100.

In some embodiments, liquid-impregnated surface 100 can have advantageous droplet roll-off properties that minimize the accumulation of the contacting liquid CL on the surfaces. Without being bound to any particular theory, in some embodiments, a roll-off angle which is the angle of inclination of the liquid-impregnated surface 100 at which a droplet of contact liquid placed on the textured solid begins to move, can be less than about 50°, less than about 40°, less than about 30°, less than about 25°, or less than about 20° for a specific volume of contact liquid. In such embodiments, the roll off angle can vary with the volume of the contact liquid included in the droplet, but for a specific volume of the contact liquid, the roll off angle remains substantially the same.

In some embodiments, the impregnating liquid 120 can include one or more additives to prevent or reduce evaporation of the impregnating liquid 120. For example, a surfactant can be added to the impregnating liquid 120. The surfactants can include, but are not limited to, docosenoic acid, trans-13-docosenoic acid, cis-13-docosenoic acid, nonylphenoxy tri(ethyleneoxy) ethanol, methyl 12-hydroxyoctadecanate, 1-Tetracosanol, fluorochemical "L-1006", and any combination thereof. Examples of surfactants described herein and other surfactants which can be included in the impregnating liquid can be found in White, I., "Effect of Surfactants on the Evaporation of Water Close to 100 C." Industrial & Engineering Chemistry Fundamentals 15.1 (1976): 53-59. In some embodiments, the additives can include $C_{16}H_{33}COOH$, $C_{17}H_{33}COOH$, $C_{18}H_{33}COOH$, $C_{19}H_{33}COOH$, $C_{14}H_{29}OH$, $C_{16}H_{33}OH$, $C_{18}H_{37}OH$, $C_{20}H_{41}OH$, $C_{22}H_{45}OH$, $C_{17}H_{35}COOCH_3$, $C_{15}H_{31}COOC_2H_5$, $C_{16}H_{33}OC_2H_4OH$, $C_{18}H_{37}OC_2H_4OH$, $C_2pH_{41}OC_2H_4OH$, $C_{22}H_{45}OC_2H_4OH$, Sodium docosyl sulfate (SDS), poly(vinyl stearate), Poly (octadecyl acrylate), Poly(octadecyl methacrylate) and any combination thereof. Further examples of additives can be found in Barnes, G.T., "The potential for monolayers to reduce the evaporation of water from large water storages", Agricultural Water Management 95.4 (2008): 339-353.

The liquid delivery mechanism 114 is configured to transfer the impregnating liquid 120 to the interstitial regions between the solid features 112. In this manner, the liquid delivery mechanism 114 can be configured to maintain a replenishing supply of the impregnating liquid 120 to the interstitial regions such that any impregnating liquid 120 lost from the liquid-impregnated surface 100 is replaced by fresh impregnating liquid 120 by the liquid delivery mechanism 114. In some embodiments, the liquid delivery mechanism 114 can include a reservoir containing a supply of impregnating liquid 120 and fluidically coupled to the interstitial regions such that a supply of impregnating liquid 120 can flow into the interstitial regions by capillary action. In some embodiments, the reservoir of impregnating liquid 120 can be at a higher pressure than the interstitial regions such that the supply of impregnating liquid is forced into the interstitial regions by the pressure differential. In some embodiments, the liquid delivery mechanism can include a pumping mechanism configured to transfer impregnating liquid from the reservoir to the interstitial regions.

For example, in some embodiments, the liquid delivery mechanism 114 can include a double walled surface 100 that includes an interior region that defines a reservoir for containing a supply of the impregnating liquid 120. A first surface of the surface 100, in contact with the solid features 112 can have pores to fluidically couple the impregnating liquid 120 in the reservoir with the interstitial regions of the solid features 112. For example, the impregnating liquid 120 can flow from the reservoir into the interstitial regions by capillary action. In some embodiments, a pumping mechanism can be used to pump the impregnating liquid 120 from the reservoir into the interstitial regions. In some embodiments, a liquid delivery mechanism can also be used to deliver impregnating liquid 120 to the interstitial regions of the solid features 112. In some embodiments, a pipe or a conduit that includes the liquid impregnated surface 100 can include one or more through holes or pores defined on a sidewall of the pipe. A sheath can be disposed around the pipe or the conduit such that a reservoir for holding a volume of replenishing impregnating liquid is formed between the sheath and the pipe. This reservoir hereinafter maybe referred to as a "secondary reservoir" or a "local reservoir". In this manner, any impregnating liquid lost from the liquid-impregnated surface can be replaced by replenishing impregnating liquid from the reservoir. Therefore the emerged fraction area, $\phi$, is maintained less than a certain value, as mentioned above. In some embodiments, only a portion of the surface 110 includes pores. In such embodiments, a jacket, for example, a tee structure can enclose the portion of the surface 110 that includes the pores. The jacket can include a reservoir of the impregnating liquid 120 which is in fluidic communication with the interstitial regions of the solid features 112 via the pores includes in the surface 110. In this manner, a replenishing supply of the impregnating liquid 120 can be communicated to the liquid-impregnated surface 100.

The liquid-impregnated surface 100 can be in contact with a contact liquid CL such that, the contact liquid CL moves easily over the liquid-impregnated surface 100. The contact liquid CL, can be any liquid that is slightly miscible or immiscible with the impregnating liquid 120 such as, for example, water, edible liquids or aqueous formulations (e.g., ketchup, mustard, mayonnaise, honey, etc.), environmental fluids (e.g., sewage, rain water), bodily fluids (e.g., urine, blood, stool), or any other fluid. In some embodiments, the contact liquid CL can be a food product or a food ingredient such as, for example, a sticky, highly viscous, and/or non-Newtonian fluid or food product. Such food products can include, for example, candy, chocolate syrup, mash, yeast mash, beer mash, taffy, food oil, fish oil, marshmallow, dough, batter, baked goods, chewing gum, bubble gum, butter, peanut butter, jelly, jam, dough, gum, cheese, cream, cream cheese, mustard, yogurt, sour cream, curry, sauce, ajvar, currywurst sauce, salsa lizano, chutney, pebre, fish sauce, tzatziki, sriracha sauce, vegemite, chimichurri, HP sauce/brown sauce, harissa, kochujang, hoisan sauce, kim chi, cholula hot sauce, tartar sauce, tahini, hummus, shichimi, ketchup, mustard, pasta sauce, Alfredo sauce, spaghetti sauce, icing, dessert toppings, or whipped cream, liquid egg, ice cream, animal food, any other food product or combination thereof. In some embodiments, the contact liquid CL can include a topical or oral drug, a cream, an ointment, a lotion, an eye drop, an oral drug, an intravenous drug, an intramuscular drug, a suspension, a colloid, or any other form and can include any drug included within the FDA's database of approved drugs. In some embodiments, the contact liquid CL can include a health and beauty product, for example, toothpaste, mouth washes, mouth creams, denture fixing compounds, any other oral hygiene product, sun screens, anti-perspirants, anti-bacterial cleansers, lotions, shampoo, conditioner, moisturizers, face washes, hair-gels, medical fluids (e.g., anti-bacterial ointments or creams), any other health or beauty product, and or combination thereof. In some embodiments, the contact liquid CL can include any other non-Newtonian, thixotropic or highly viscous fluid, for example, laundry detergent, paint, oils, glues, waxes, petroleum products, fabric softeners, industrial solutions, or any other contact liquid CL.

**Interaction between Various Phases in a Liquid-Impregnated Surface**

A liquid-impregnated surface that is in contact with a contact liquid defines four distinct phases: an impregnating liquid, a surrounding gas (e.g., air), a contact liquid and a textured surface. The interactions between the different phases determine the morphology of the contact line (i.e., the contact line that defines the contact angle of a contact liquid droplet with the liquid-impregnated surface) because the contact line morphology substantially impacts the droplet pinning and therefore contact liquid mobility on the surface. There are various parameters which can play a role in defining the non-wetting performance of a liquid-impregnated surface. Key parameters include the relative contact angles of the impregnating liquid and the contact liquid, spreading coefficient, dimensions of the solid features, interfacial energies, and viscosities of the impregnating liquid and the contact liquid. Other factors include, for example, the roll off angle of contact liquid that affects how droplets are shed (whether they roll or slip), and what their shedding velocities are. Moreover, questions related to the longevity of the impregnated liquid film and its possible depletion, due to evaporation and entrainment with the droplets being shed, can have substantial bearing on the configuration of a liquid-impregnated surface, for example, the liquid-impregnated surface 100. Some of the key parameters and their impact on the liquid-impregnated surface are described below.

**1) Contact Angle of the Impregnating Liquid**

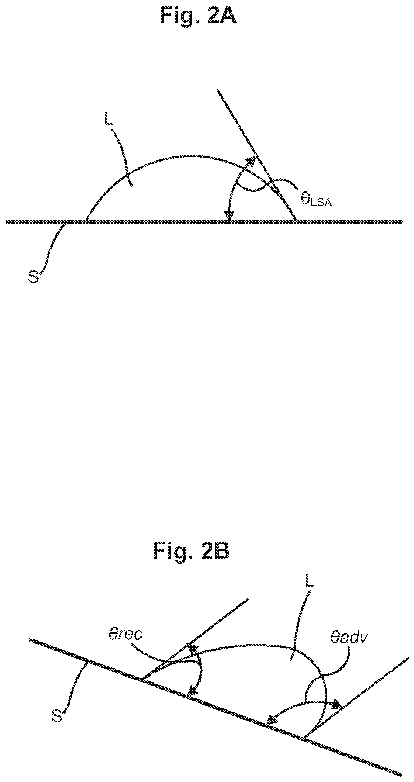

The contact angle, $\theta_{os(e)}$, is generally defined as the angle conventionally measured through goniometry, as the angle at which a liquid o, intersects with a surface, s, in the presence of an external phase 'e' (liquid or gas), at equilibrium. The contact angle can be a function of the hydrophobicity or hydrophilicity or surface energy of the liquid and the solid surface. The contact angle can also depend on the surface roughness. FIG. 2A shows the contact angle in air, $\theta_{os(a)}$ (also referred to as "the intrinsic angle" or "equilibrium contact angle" in air) of a droplet of a liquid 'o' (e.g., an impregnating liquid) disposed on a surface s (e.g., a smooth surface of the same material as surface 112,). If the surface is tilted such that the liquid droplet o starts displacing on the surface as shown in FIG. 2B, the liquid droplet o can now define an advancing (or maximal) contact angle $\theta_{os(a),adv}$ and a receding (or minimal) contact angle $\theta_{os(a),rec}$. The contact angle hysteresis is then generally defined as the difference of the advancing and the receding contact angles.

A liquid-impregnated surface (e.g. the liquid-impregnated surface 100) can define two contact angles. The first is the contact angle $\theta_{os(a)}$ which is the contact angle of the impregnating liquid (subscript 'o') on a smooth surface of the same chemistry or material as the textured surface (subscript 's') in the presence of air (subscript 'a'). Said another way, this is the contact angle a droplet of impregnating liquid (e.g., the impregnating liquid 120) will form when disposed on a smooth solid surface of the same materials as 112 and surrounded by air. Complete submergence of the textured surface in air can happen if the contact angle $\theta_{os(a)} = 0°$, such that the impregnating liquid is able to completely cover the plurality of solid features of surface 112, reducing $\phi$ to 0. Although complete submergence may be achieved temporarily by depositing excess impregnating liquid, eventually this excess will drain or flow away (e.g., under gravity or shear stress) and the liquid-air interface may contact the textured surface 112.

The second is the contact angle $\theta_{os(w)}$ which is defined by the impregnating liquid when surrounded by a contact liquid (subscript 'w') such as, for example, water, an aqueous liquid, or any other contact liquid described herein. In this scenario, the textured surface can remain submerged in the impregnating liquid if the contact angle $\theta_{os(w)}$ is also equal to zero. Information on whether both $\theta_{os(a)} = 0°$ and $\theta_{os(w)} = 0°$ impacts the choice of an impregnating liquid, for example, the impregnating liquid 120, that can be used for a given droplet liquid and textured substrate material (e.g., the solid surface 110 that includes a plurality of solid features 112 disposed thereupon). If $\theta_{os(a)} = 0°$ and $\theta_{os(w)} = 0°$, then $\phi = 0$, resulting in zero contact between the contact liquid and the surface 112..Although this condition is desirable, it is not necessarily. Alternative, less constraining requirements are described below.

**2) Spacing Between Solid Features of the Liquid-Impregnated Surface**

The critical contact angle $\theta_c$, also depends upon the interstitial spacing between the solid features included in the liquid-impregnated surface (e.g., the liquid-impregnated surface 100). The critical contact angle can be defined by

$$\theta_c = \cos^{-1}((1-\phi)/(r-\phi)),$$

where $\phi$ is the emerged area fraction, as described herein. The critical contact angle $\theta_c$ can dictate the stability of a liquid in an liquid-impregnated surface. The spacing between the solid features can be controlled such that the critical contact angle $\theta_c$ is increased above the receding contact angle $\theta_{ec,os(w)}$, such that the surface 100 remains impregnated by the impregnating liquid 120. In this case, the contact liquid does not displace the impregnating liquid to impale the solid features, and easily sheds off the liquid-impregnated surface. If the interstitial spacing is too large, then the receding contact angle $\theta_{recos(w)}$ can be greater than the critical contact angle $\theta_c$, such that the contact liquid can displace the impregnating liquid and impale the solid features, i.e. get pinned within the solid features. In the case that $\theta_{rec,os(a)} > \theta_c$, the impregnating liquid cannot be made to impregnate the surface 112.

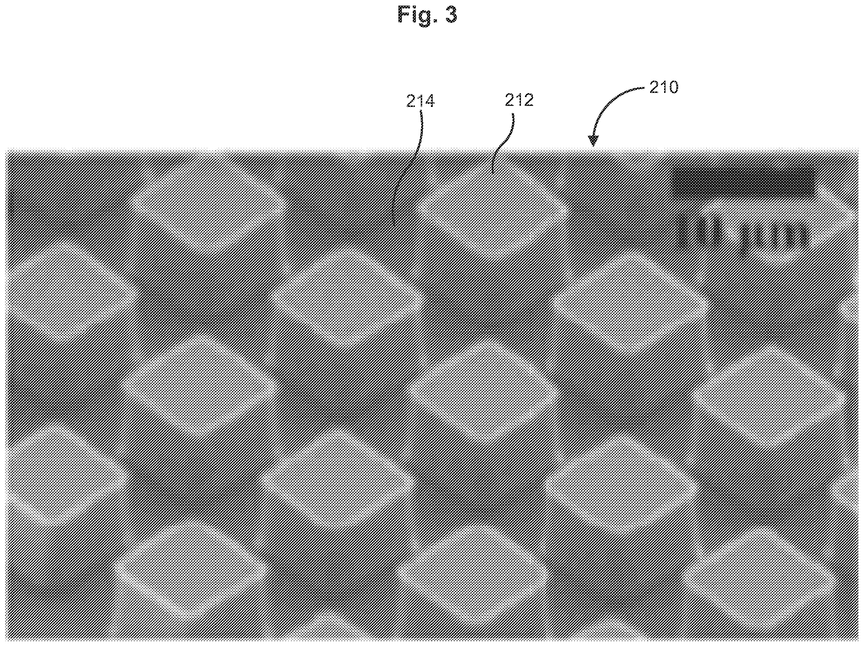

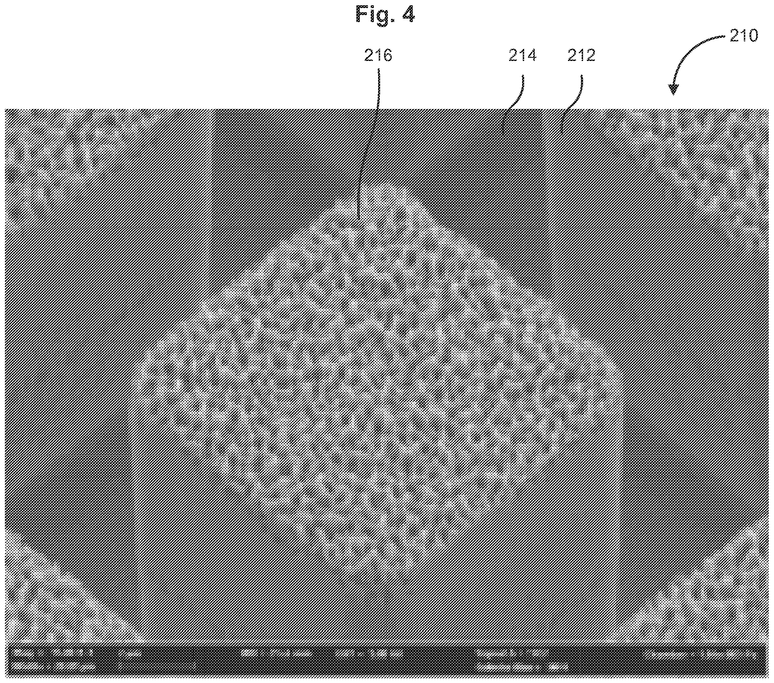

Referring now to FIGS. 3-6, a liquid-impregnated surface 200 includes a textured surface 210 and an impregnating liquid 220. The textured surface 210 includes square microposts 212 etched in silicon using standard photolithography process (FIG. 3). A photomask with square windows was used and the pattern was transferred to photoresist using UV light exposure. Next, reactive ion etching in inductively-coupled plasma was used to etch the exposed areas to form microposts 212, such that microposts 212 are separated by interstitial region 214. Each micropost 212 had a square geometry with width "$a$" of about 10 $\mu$m, height $h$ of about 10 $\mu$m, and varying edge-to-edge spacing $b$ of about 5, 10, 25, or 50 $\mu$m. A second level of roughness was produced on microposts 212, in some cases, by creating nanograss 216 (FIG. 4). For this purpose, Piranha-cleaned micropost 212 surfaces were etched in alternating flow of $SF_6$ and $O_2$ gases for 10 minutes in inductively-coupled plasma.

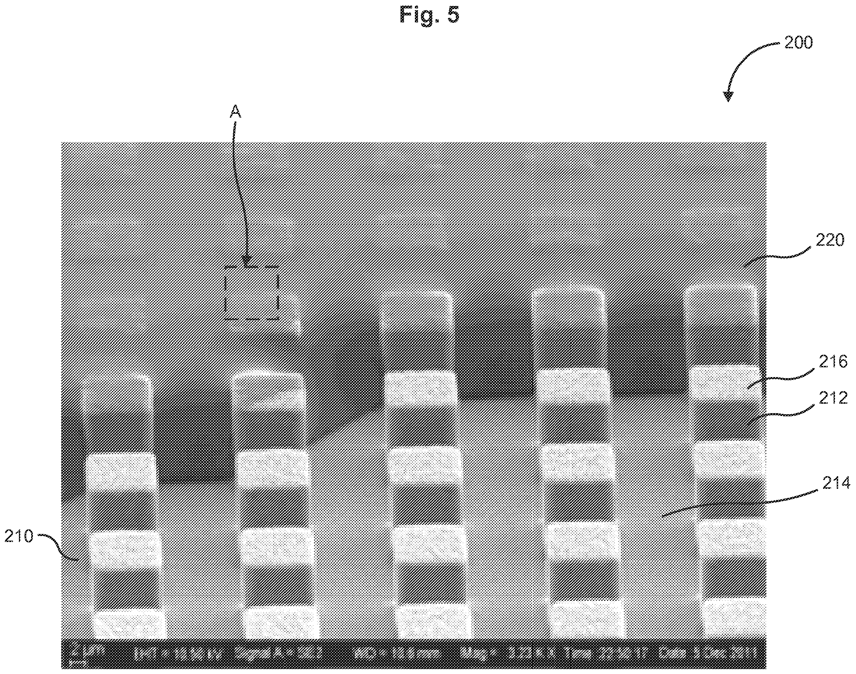

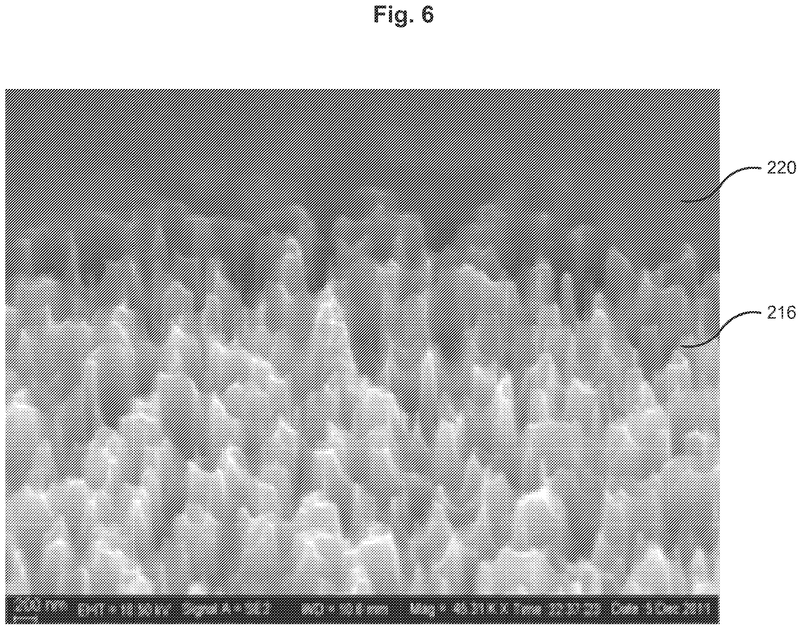

The samples were then cleaned in a Piranha solution and treated with a low-energy silane (octadecyltrichlorosilane (OTS)) by solution deposition. The textured surface 210 was impregnated with the impregnating liquid 220 (FIG. 5 and 6), for example, BMIm (1-butyl-3-methylimidazolium bis(trifluoromethylsulfonyl) imide), silicone oil, or DI water, by slowly dipping the textured surface into a reservoir of the lubricant. The textured surface 210 was then withdrawn at speed S slow enough that capillary numbers $Ca = \mu_o S/\gamma_{oa} < 10^{-5}$ to ensure that no excess fluid remained on the micropost 212 tops where $\mu o$ is the dynamic viscosity and $\gamma_{oa}$ is the surface tension of the impregnating liquid 220. When the advancing angle $\theta_{adv,os(a)}$ is less than $\theta_c$ the impregnating liquid 220 film will not spontaneously spread into the textured surface 210, as can be seen for BMIm in FIG. 5. FIG. 6 shows an enlarged view of the region defined by the arrow A in FIG. 5. However, by withdrawing the textured surface 210 from a reservoir of BMIm, the impregnating film remains stable, since $\theta_{rec,os(a)} < \theta_c$ for the microposts 212 with $b = 5$ $\mu$m and 10 $\mu$m.

Table 1 shows various configuration of features formed on the textured surface 210. Table 2 includes intrinsic contact angles of impregnating liquids 220 on smooth surfaces of the same materials as the textured material 210. Note if the textured surface 210 is not coated with OTS, then $\theta_{os(w)} > \theta_c$ for both impregnating liquids 220 and all post spacing $b$. Thus water droplets should displace the hydrophobic liquid 220 and get impaled by the microposts 212 leading to significant pinning, which was confirmed as such droplets did not roll-off of these textured surfaces.

Table 1

| Post spacing, $b$ ($\mu$m) | $R$ | $\phi$ | $\theta_c$(°) |
| --- | --- | --- | --- |
| 5 | 2.8 | 0.44 | 76 |
| 7.5 | 2.3 | 0.33 | 70 |
| 10 | 2.0 | 0.25 | 65 |
| 25 | 1.3 | 0.08 | 42 |
| 50 | 1.1 | .093 | 26 |

**3) Spreading coefficient and "Cloaking"**

In some embodiments, an impregnating liquid can "cloak" a droplet of a contact liquid. Cloaking occurs when the impregnating liquid spreads over the droplet of the contact liquid. In some embodiments, cloaking can cause the contact liquid to impale the impregnating liquid and therefore negatively impact the non-wetting characteristics of a liquid-impregnated surface (e.g., the liquid-impregnated surface 100). Furthermore, cloaking can also cause the impregnating liquid to get entrained with the contact liquid. This can lead to a loss of the impregnating liquid as the contact liquid is displaced from the liquid-impregnated surface. The degree of cloaking of the contact liquid with the impregnating liquid depends on the spreading coefficient $S_{ow(a)}$ of the impregnating liquid on the contact liquid in air. The spreading coefficient $S_{ow(a)}$ can be determined from the relative surface tension at the interface of each of the impregnating liquid, contact liquid, and air by the equation $S_{ow(a)} = \gamma_{wa} - \gamma_{wo} - \gamma_{oa}$. Here $\gamma_{wa}$ is the interfacial surface tension between the contact liquid and air, $\gamma_{wo}$ is the interfacial surface tension between the contact liquid and the impregnating liquid, and $\gamma_{oa}$ is the interfacial surface tension between the impregnating liquid and air. If $S_{ow(a)} > 0$, then cloaking will occurs, and if $S_{ow(a)} < 0$ then only partial cloaking or substantially no cloaking will occur. This knowledge can be used to select an impregnating liquid that provides an interfacial surface tension $\gamma_{wo}$ between the contact liquid and the impregnating liquid such that $S_{ow(a)} < 0$, and cloaking can be reduced or substantially eliminated.

In some embodiments, cloaking can be desirable and can be used as a means for preventing environmental contamination, like a time capsule preserving the contents of the cloaked material. Cloaking can result in encasing of the material thereby cutting its access from the environment. This can be used for transporting materials (e.g., bioassays) across a length in a way that the material is not contaminated by the environment. In some embodiments, cloaking can be exploited to prevent corrosion, fouling, etc. In some embodiments, cloaking can be used for preventing vapor-liquid transformation (e.g., water vapor, metallic vapor, etc.). In some embodiments, cloaking can be used for inhibiting liquid-solid formation (e.g., ice, metal, etc.). In some embodiments, cloaking can be used to make reservoirs for carrying the materials, such that independent cloaked materials can be controlled and directed by external means (like electric or magnetic fields).

In some embodiments, the amount of cloaking can be controlled by various properties of the impregnating liquid such as, for example, viscosity and/or surface tension of the impregnating liquid. Additionally or alternatively, the de-wetting of the cloaked material can also be controlled to release the material, for example a system in which a product is disposed on the liquid-impregnated surface at one end, and upon reaching the other end is exposed to an environment that causes the product to uncloak.

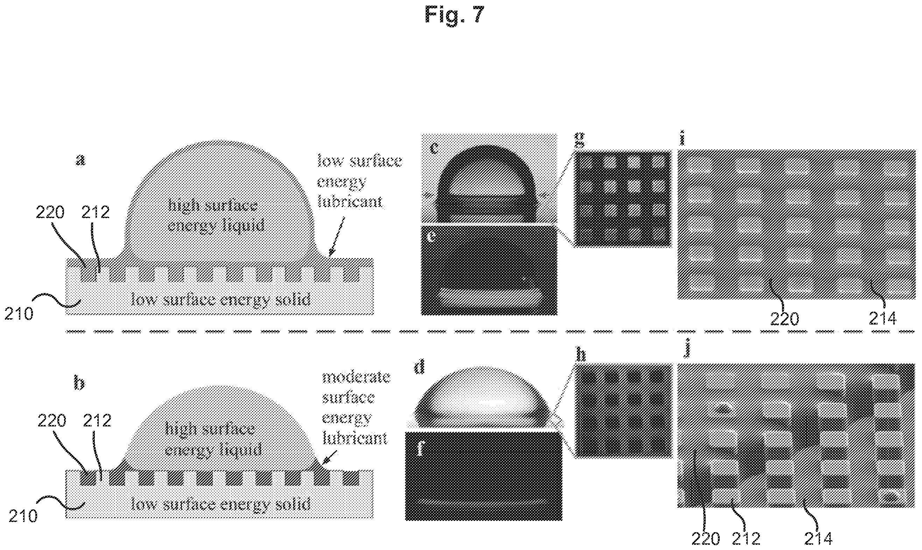

Referring now to FIGS. 7a and 7b, the surface 210 which includes the solid features 212 disposed thereon was impregnated with two different impregnating liquids 220; silicone oil, for which $S_{ow(a)} \approx 6$ mN/m and an ionic liquid (1-butyl-3-methylimidazolium bis(trifluoromethylsulfonyl) imide - BMIm) for which $S_{ow(a)} \approx -5$ mN/m. Ionic liquids have extremely low vapor pressures ($\sim 10^{12}$ mmHg), and therefore they mitigate the concern of the impregnating liquid loss through evaporation. Goniometric measurements of the advancing and receding contact angles of these liquids in the presence of air and water as well as their interfacial tensions were performed and are presented in Table 2 and Table 3.

Table 2

| Impregnating Liquid | Surface | $\theta_{adv,os(a)}$ (°) | $\theta_{rec,os(a)}$ (°) | $\theta_{adv,os(w)}$ (°) | $\theta_{rec,os(w)}$ (°) |
|---|---|---|---|---|---|
| Silicone oil | OTS-treated silicon | 0 | 0 | $20 \pm 5$ | 0 |
| BMIm | OTS treated silicon | $67.8 \pm 0.3$ | $60.8 \pm 1.0$ | $61.3 \pm 3.6$ | $12.5 \pm 4.5$ |
| DI water | OTS-treated silicon | $112.5 \pm 0.6$ | $95.8 \pm 0.5$ | NA | NA |
| Silicone oil | Silicon | 0 | 0 | $153.8 \pm 1.0$ | $122 \pm 0.8$ |
| BMIm | Silicon | $23.5 \pm 1.8$ | $9.8 \pm 0.9$ | $143.4 \pm 1.8$ | $133.1 \pm 0.9$ |
| DI water | Silicon | $20 \pm 5°$ | 0 | NA | NA |

Table 3 shows surface and interfacial tension measurements and resulting spreading coefficients $S_{ow(a)} = \gamma_{wa} - \gamma_{ow} - \gamma_{oa}$, of 9.34, 96.4, and 970 cP Dow Corning PMX 200 Silicone oils on water in air. Values of $\gamma_{ow}$ were provided by Dow Corning.

Table 3

| Impregnating Liquid | $\gamma_{ow}$ (mN/m) | $\gamma_{oa}$ (mN/m) | $\gamma_{wa}$ (mN/m) | $S_{ow(a)}$ (mN/m) |
|---|---|---|---|---|
| Silicone oil (9.34 cP, 96.4 cP) | 46.7 | 20.1 | 72.2 | 5.4 |
| Silicone oil (970 cP) | 45.1 | 21.2 | 72.2 | 5.9 |

As shown in FIG. 7b, in the case of BMIm there are three distinct 3-phase contact lines at the perimeter of the drop that confine the wetting ridge: the oil-water-air contact line, the oil-solid-air contact line outside the drop, and the oil-solid-water contact line underneath the drop. These contact lines exist because $\theta_{os(a)} > 0$, $\theta_{os(w)} > 0$, and $S_{ow(a)} < 0$. In contrast, in the case of silicone oil (FIG. 7a), none of these contact lines exist because $\theta_{os(a)} = 0$, $\theta_{os(w)} = 0$, and $S_{ow(a)} > 0$.

FIG 7c shows an 8 $\mu$l water droplet placed on the silicone oil impregnated textured surface 210. The droplet forms a large apparent contact angle ($\sim 100$ degrees) but very close to the solid surface (arrows in FIG. 7c), its profile changes from convex to concave. When a fluorescent dye was added to the silicone oil and imaged under UV light, the point of inflection corresponded to the height to which an annular ridge of silicone oil was pulled up in order to satisfy a vertical force balance of the interfacial tensions at the inflection point (FIG. 7e). Although, the oil should spread over the entire droplet (FIG. 7c), the cloaking film was too thin to be captured in these images. The "wetting ridge" was also observed in the case of ionic liquid (FIG. 7d, FIG. 7f). Such wetting ridges are reminiscent of those observed around droplets on soft substrates.

As described herein, the textured surface 210 can be completely submerged in the impregnating liquid 220 if $\theta_{os(a)} = 0°$. This condition was found to be true for silicone oil, implying that the tops of the microposts 212 should be covered by a stable thin oil film. This film was observed experimentally using laser confocal fluorescence microscopy (LCFM); the micropost 212 tops appear bright due to the presence of a fluorescent dye that was dissolved in the oil (FIG. 7g). Environmental SEM images of the surface (FIG. 7i) show the oil-filled texture and confirm that this film is less than a few microns thick, consistent with prior estimates of completely-wetting films. On the other hand, BMIm has a non-zero contact angle on a smooth OTS-coated silicon surface ($\theta_{os(a)} = 65 \pm 5°$) indicating that with this impregnating liquid the post tops should remain dry. This was confirmed by LCFM images (FIG.7h) which showed that the post tops appear dark as there is no dye present to fluoresce. Since BMIm is conductive and has an extremely low vapor pressure, it could be imaged in a SEM. As shown in FIG. 7j, discrete droplets resting on micropost tops are seen, confirming that a thin film was not stable on the post tops in this case.

## Stable Configuration of Contact Liquid Droplets on Liquid-Impregnated Surfaces

The relationships between the contact angles and the spreading coefficient of the impregnating liquid can be used to develop a thermodynamic framework to determine various states of the liquid-impregnated surface. The thermodynamic framework which is based on the interfacial energies of the surface, impregnating liquid, contact liquid, and ambient air can be used to ascertain a combination of a textured surface and impregnating liquid that will provide most favorable non-wetting properties for any particular contact liquid.

As described herein, a liquid-impregnated surface that includes an impregnating liquid (e.g., oil) disposed on a textured surface in the presence of air (i.e., no contact liquid) can have three possible states. These include a first state A1 in which the solid features of the surface are not impregnated with impregnating liquid (i.e., are dry), a second state A2 in which the solid features of the surface are impregnated with impregnating liquid but have emergent features, and a third state A3 in which the solid features are completely impregnated with the impregnating liquid (i.e., encapsulated). The same liquid-impregnated surface can have three separate states when a contact liquid (e.g., water) is in contact with the liquid-impregnated surface. These include a first state W1 in which the textured surface is impaled with the contact liquid, a second state W2 in which the solid features of the surface are impregnated with impregnating liquid but have emergent features, and a third state W3 in which the solid features are completely impregnated with the impregnating liquid (i.e., encapsulated). The stable state will be the one that has the lowest interfacial energy E. For example, if state W3 has the lowest interfacial energy $E_{W3}$, this will be the most stable state. In this state the impregnating liquid will substantially encapsulate the solid features of the textured surface in the presence of the contact liquid and thereby, provide optimum non-wetting properties. Thus, knowledge of the interfacial energy can be used to select the best combination of the textured surface and the impregnating liquid for a given contact liquid.

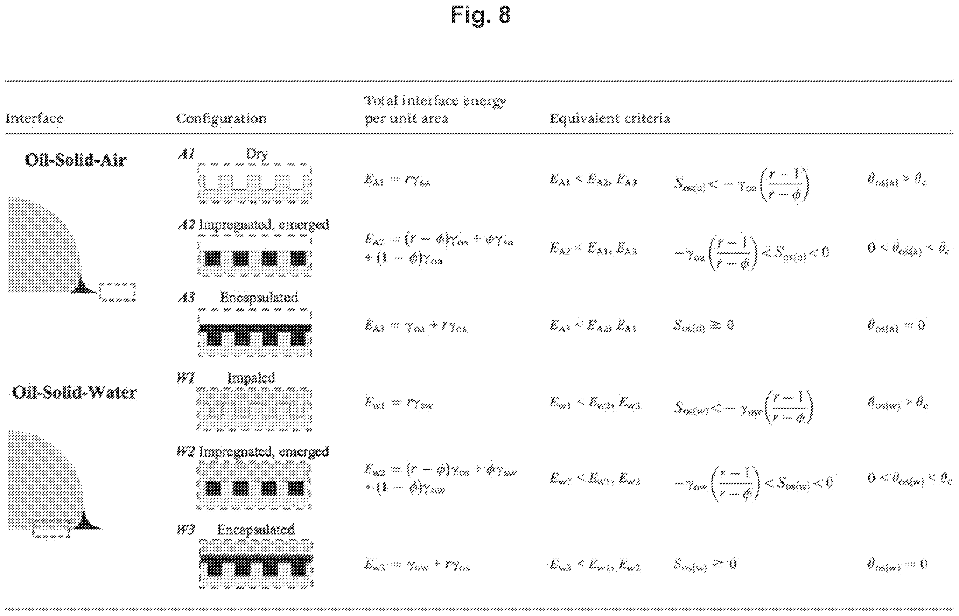

FIG. 8 shows various states of liquid-impregnated surface that includes oil as the impregnating liquid and water as the contact liquid. First, the states of the liquid-impregnated surface in air (i.e., without the contact liquid) are discussed. A textured surface, for example, textured surface 210, is slowly withdrawn from a reservoir of oil. The resulting surface could be in any of states A1, A2, and A3 depending on which has the lowest energy. For example, state A2 would be stable if it has the lowest total interface energy, i.e. $E_{A2} < E_{A1}, E_{A3}$. From FIG. 8, this results in:

$$E_{A2} < E_{A1} \qquad \Leftrightarrow \qquad (\gamma_{sa} - \gamma_{os})/\gamma_{oa} > (1-\phi)/(r-\phi) \ (1)$$

$$E_{A2} < E_{A3} \qquad \Leftrightarrow \qquad \gamma_{sa} - \gamma_{os} - \gamma_{oa} < 0 \qquad (2)$$

where $\phi$ is the emergent area fraction, and $r$ is the ratio of total surface area to the projected area of the solid. In the case of square posts with width $a$, edge-to-edge spacing $b$, and height $h$, $\phi = a^2/(a+b)^2$ and $r = 1+4ah/(a+b)^2$. Applying Young's equation, $\cos(\theta_{os(a)}) = (\gamma_{sa}-\gamma_{os})/\gamma_{oa}$, Eq. (1) reduces to the hemi-wicking criterion for the propagation of a oil through a textured surface: $\cos(\theta_{os(a)}) > (1-\phi)/(r-\phi) = \cos(\theta_c)$. This requirement can be conveniently expressed as $\theta_{os(a)} < \theta_c$. In Eq. (2), $\gamma_{sa} - \gamma_{os} - \gamma_{oa}$ is simply the spreading coefficient $S_{os(a)}$ of oil on the textured surface in the presence of air. This can be reorganized as $(\gamma_{sa} - \gamma_{os})/\gamma_{oa} < 1$, and applying Young's equation again, Eq. (2) can be written as $\theta_{os(a)} > 0$. Expressing Eq. (1) in terms of the spreading coefficient $S_{os(a)}$, yields: $-\gamma_{oa}(r-1)/(r-\phi) < S_{os(a)}$. The above simplifications

then lead to the following equivalent criteria for the surface to be in state *A2*:

$$E_{A2} < E_{A1}, E_{A3} \iff \theta_c > \theta_{os(a)} > 0 \iff -\gamma_{oa}(r-1)/(r-\phi) < S_{os(a)} < 0 \quad (3)$$

Similarly, state *A3* would be stable if $E_{A3} < E_{A2}, E_{A1}$. From FIG. 8, this gives:

$$E_{A3} < E_{A2} \iff \theta_{os(a)} = 0 \iff \gamma_{sa} - \gamma_{os} - \gamma_{oa} \equiv S_{os(a)} \geq 0 \quad (4)$$

$$E_{A3} < E_{A1} \iff \theta_{os(a)} < \cos^{-1}(1/r) \iff S_{os(a)} > -\gamma_{oa}(1-1/r) \quad (5)$$

Note that Eq. (5) is automatically satisfied by Eq. (4), thus the criterion for state *A3* to be stable (i.e. encapsulation) is given by Eq. (4). Following a similar procedure, the condition for state *A1* to be stable can be derived as:

$$E_{A1} < E_{A2}, E_{A3} \iff \theta_{os(a)} > \theta_c \iff S_{os(a)} < -\gamma_{oa}(r-1)/(r-\phi) \quad (6)$$

The rightmost expression of Eq. (4) can be rewritten as $(\gamma_{sa} - \gamma_{os})/\gamma_{oa} \geq 1$. Young's equation would suggest that if $\theta_{os(a)} = 0$ degrees , then $(\gamma_{sa} - \gamma_{os})/\gamma_{oa} = 1$ (i.e. $S_{os(a)} = 0$). However, $\theta_{os(a)} = 0$ degrees is true also for the case that $(\gamma_{sa} - \gamma_{os})/\gamma_{o\alpha} > 1$ (i.e. $S_{os(a)} > 0$). Young's equation predicts the contact angle based on balancing the surface tension forces on a contact line, such that the equality only exists for a contact line *at static equilibrium.* For a spreading film ($S_{os(a)} > 0$) a static contact line doesn't exist, hence precluding the applicability of Young's equation.

Referring now to the states of the liquid-impregnated surface in the presence of water as the contact liquid, the interface beneath the droplet will attain one of the three different states - *W1, W2,* or *W3* (FIG. 8) - depending on which has the lowest energy, as described herein. Applying the same method to determine the stable configurations of the interface beneath the droplet as described herein, and using the total interface energies provided in FIG. 8, the stability requirements take a form similar to equations (3), (4), and (6), with $\gamma_{oa}, \gamma_{sa}, \theta_{os(a)}, S_{os(a)}$, replaced with $\gamma_{ow}, \gamma v_{sw}, \theta_{os(w)}$, $S_{os(w)}$ respectively. The critical contact angle $\theta_c$ is not affected by the surrounding environment as it is only a function of the texture parameters, $\phi$ and r. Thus, the texture will remain impregnated with oil beneath the droplet with emergent post tops (i.e. state W2) when:

$$E_{W2} < E_{W1}, E_{W3} \iff \theta_c > \theta_{os(w)} > 0 \iff -\gamma_{ow}(r-1)/(r-\phi) < S_{os(w)} < 0 \quad (7)$$

State *W3* will be stable (i.e. the oil will encapsulate the texture) when:

$$E_{W3} < E_{W1}, E_{W2} \iff \theta_{os(w)} = 0 \iff \gamma_{sw} - \gamma_{os} - \gamma_{ow} \equiv S_{os(w)} \geq 0. \quad (8)$$

and the droplet will displace the oil and be impaled by the textures (state *W1*) when:

$$E_{W1} < E_{W2}, E_{W3} \iff \theta_{os(w)} > \theta_c \iff S_{os(w)} < -\gamma_{ow}(r-1)/(r-\phi) \quad (9)$$

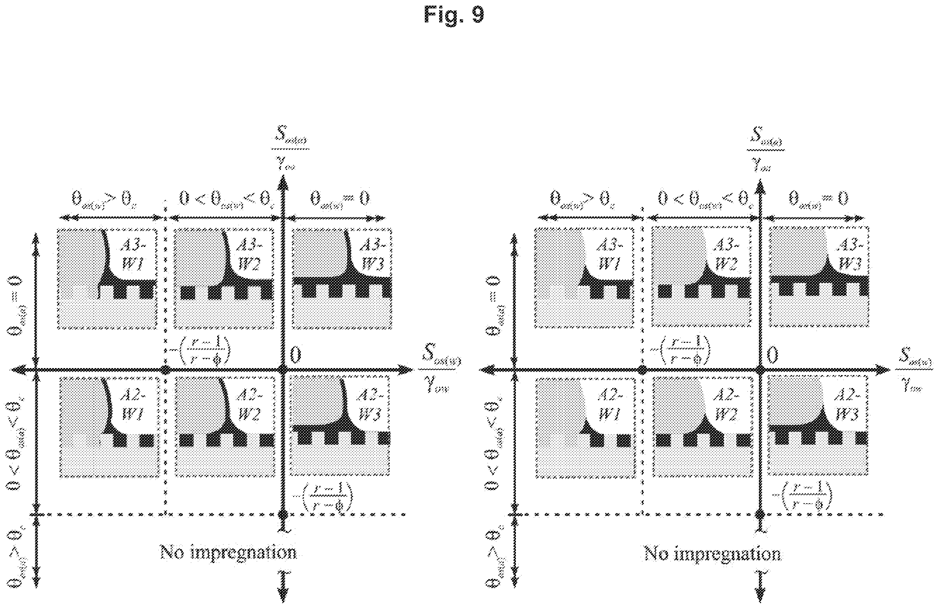

This thermodynamic framework can be combined with the cloaking criterion described herein to obtain an overall framework which can be used to predict the performance of a liquid-impregnated surface in the presence of any particular contact liquid. FIG. 9 shows the various thermodynamic states of a textured surface impregnated with an impregnating liquid (oil) and that includes a droplet of a contact liquid (water) disposed thereon. The states of the liquid-impregnated surface are predicted for a first configuration in which the spreading coefficient $S_{ow(a)} > 0$ (i.e., the impregnating liquid cloaks the droplet of the contact liquid), and a second configuration in which the spreading coefficient $S_{ow(a)} < 0$ (i.e., no cloaking occurs). The cloaking criterion is represented by the upper two schematic drawings shown in FIG. 9. For each of these configurations, six different states are possible depending on how the oil interacts with the surface texture in the presence of air (vertical axis in FIG. 9) and water (horizontal axis in FIG. 9). The vertical and horizontal axes are the normalized spreading coefficients $S_{os(a)}/\gamma_{oa}$ and $S_{os(w)}/\gamma_{ow}$ respectively. Considering first the vertical axis of FIG. 9, when $S_{os(a)}/\gamma_{oa} < -(r-1)/(r-\phi)$ (i.e., when Eq. (6) holds), oil does not even impregnate the texture. As $S_{os(a)}/\gamma_{oa}$ increases above this critical value, impregnation becomes feasible but the post tops are still left emerged. Once

$S_{os(a)}/\gamma_{oa} > 0$, the post tops are also submerged in the oil leading to complete encapsulation of the texture. Similarly, on the x-axis of FIG. 9 moving from left to right, as $S_{os(w)}/\gamma_{ow}$ increases, the droplet transitions from an impaled state to an impregnated state to a fully-encapsulated state.

FIG. 9 shows that there can be up to three different contact lines, two of which can get pinned on the texture. The degree of pinning determines the roll-off angle $\alpha^*$ which is the angle of inclination at which a droplet of a contact liquid placed on the textured surface begins to move. Droplets that completely displace the oil (states *A3-W1, A2-W1* in FIG. 8) are not expected to roll off the surface. These states are achieved when $\theta_{os(w)} > \theta_c$ as is the case for both BMI-Im and silicone oil impregnated surfaces when the silicon substrates are not treated with OTS (see Table 1). As expected, droplets did not roll off of these surfaces. Droplets in states with emergent post tops (*A3-W2, A2-W2, A2-W3*) are expected to have reduced mobility that is strongly texture dependent, whereas those in states with encapsulated posts outside *and* beneath the droplet (the *A3-W3* states in FIG. 8) are expected to exhibit no pinning and consequently infinitesimally small roll-off angles $\alpha^*$.

**Solid Feature Spacing, Hierarchical Solid Features, and Roll off Angle**

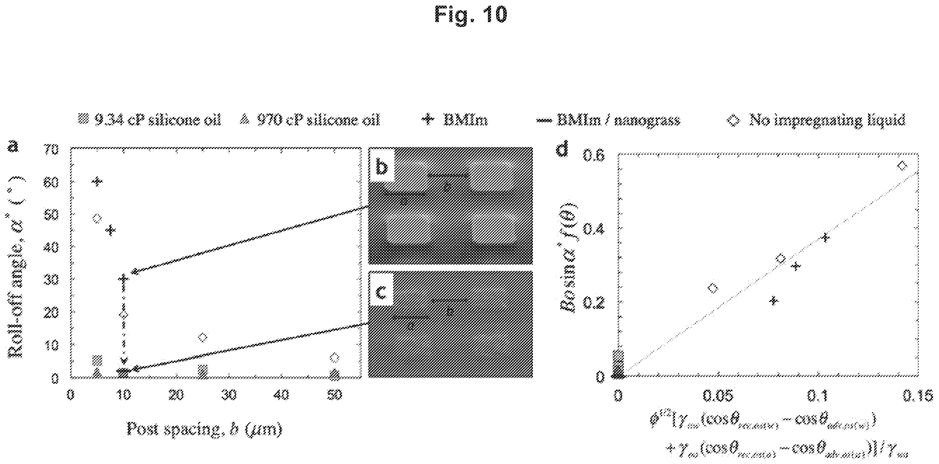

In some embodiments, solid features disposed on a surface can be configured to include hierarchical features, as described herein. Such hierarchical features can enable complete impregnation and encapsulation of the solid features with an impregnating liquid that would otherwise not completely encapsulate the solid features if the hierarchical features are absent. FIG. 10a-d shows measurements on roll-off angles $\alpha^*$ of 5 µl water droplets on silicone oil and BMIm impregnated textured surfaces with varying post spacing *b*. For comparison, the same textured surfaces without an impregnating liquid (no impregnating liquid, which is the conventional super impregnating case) were also evaluated. The silicone oil encapsulated textured surfaces have extremely low roll-off angles $\alpha^*$ regardless of the post spacing b and oil viscosity, showing that contact line pinning was negligible, as predicted for a liquid droplet in an *A3-W3* state with no contact lines on the textured substrate. On the other hand, BMIm impregnated textures showed much higher roll-off angles $\alpha^*$, which increased as the spacing decreased - a trend that is similar to Cassie droplets on super impregnating surfaces. This observation shows that pinning was significant in this case, and occurs on the emergent post tops (FIG. 10b). Pinning was significantly reduced by adding a second smaller length scale texture (i.e. nanograss on the posts), so that BMIm impregnated the texture even on the post tops, thereby substantially reducing the emergent area fraction $\phi$. The roll-off angle $\alpha^*$ decreased from over 30 degrees to only about 2 degrees. Note that the reduction in the emergent area fraction $\phi$ is not due to the absolute size of the texture features; since the oil-water and oil-air interfaces intersect surface features at contact angles $\theta_{os(w)}$ and $\theta_{ow(a)}$, and $\phi$ depends on these contact angles and feature geometry.

The effect of texture on the roll-off angle $\alpha^*$ can be modeled by balancing gravitational forces with pinning forces. A force balance of a water droplet on a smooth solid surface at incipient motion gives $\rho_w \Omega g \sin \alpha^* \approx 2R_b\gamma_{wa}$ $(\cos\theta_{rec,ws(a)} - \cos\theta_{adv,ws(a)})$, where $\rho_w$ is the density of the contact liquid droplet of volume $\Omega$, g is the gravitational acceleration, $R_b$ is the droplet base radius, and $\theta_{adv,ws(a)}$ and $\theta_{rec,ws(a)}$ are the advancing and receding contact angles of contact liquid droplet in air on the smooth solid surface. Pinning results from contact angle hysteresis of up to two contact lines: an oil-air-solid contact line with a pinning force per unit length given by $\gamma_{oa}$ $(\cos\theta_{rec,os(a)} - \cos\theta_{adv,os(a)})$, and an oil-water-solid contact line with a pinning force per unit length given by $\gamma_{ow}$ $(\cos\theta_{rec,os(w)} - \cos\theta_{adv,os(w)})$. The length of the contact line over which pinning occurs is expected to scale as $R_b \phi^{1/2}$ where $\phi^{1/2}$ is the fraction of the droplet perimeter $(\sim R_b)$ making contact with the emergent features of the textured substrate. Thus a force balance tangential to the surface gives:

$$\rho_w \Omega g \sin\alpha^* \sim R_b \phi^{1/2}[\gamma_{ow}(\cos\theta_{rec,os(w)} - \cos\theta_{adv,os(w)}) + \gamma_{oa}(\cos\theta_{rec,os(a)} - \cos\theta_{adv,os(a)})] \quad (10)$$

Dividing Eq. (10) by $R_b\gamma_{wa}$ we obtain a non-dimensional expression:

$$Bo \sin\alpha^* f(\theta) \sim \phi^{1/2}[\gamma_{ow}(\cos\theta_{rec,os(w)} - \cos\theta_{adv,os(w)}) + \gamma_{oa}(\cos\theta_{rec,os(a)} - \cos\theta_{adv,os(a)})]/\gamma_{wa} \quad (11)$$

where $f(\theta)=\Omega^{1/3}/R_b=[(\pi/3)(2+\cos\theta)(1-\cos\theta)^2/\sin^3\theta]^{1/3}$ by assuming the droplet to be a spherical cap making an apparent contact angle $\theta$ with the surface. $Bo=\Omega^{2/3}\rho_w g/\gamma_{wa}$ is the Bond number, which compares the relative magnitude of gravitational forces to surface tension forces. Values for $\theta_{rec,os(w)}$, $\theta_{adv,os(w)}$, $\theta_{rcc,os(a)}$, $\theta_{adv,os(a)}$, $\gamma_{ow}$, $\gamma_{oa}$, and $\gamma_{wa}$ are provided in Tables 2 and 3. FIG. 10d shows that the measured data is in reasonable agreement with the scaling of Eq. (11). The data for the silicone oil encapsulated surface and for the BMIm impregnated, nanograss-covered posts lie close to the origin as both $\phi$ and $\alpha^*$ are very small in these cases.

### Dynamics of Droplet Shedding - Rolling Angle and Rolling Velocity

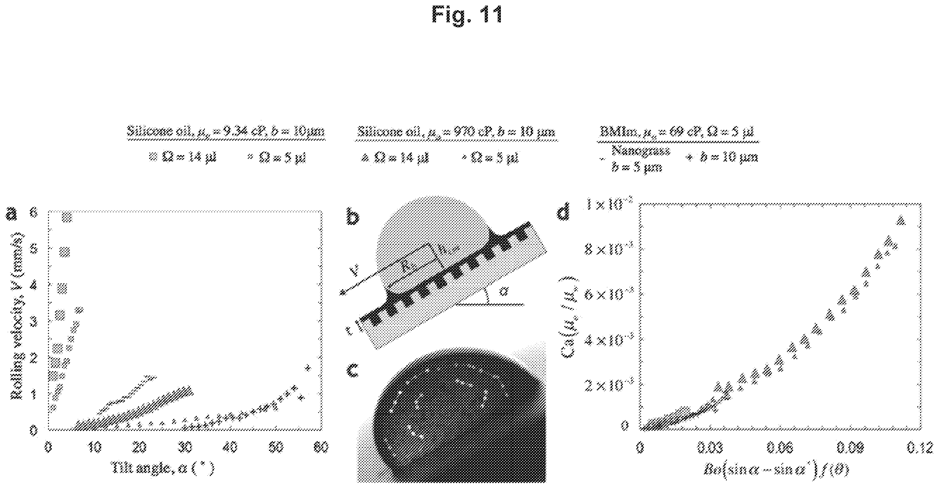

The speed or velocity at which a contact liquid having a volume $\Omega$ disposed on a liquid-impregnated surface, rolls of the liquid-impregnated surface depends on the viscosity of the impregnating liquid and the pinning of the contact line of a droplet of the contact liquid on the liquid-impregnated surface. Once gravitational forces acting on the contact liquid droplet overcome the pinning forces, the velocity attained by the droplet determines how quickly it can be shed, which reflects the non-wetting performance of the surface. The steady-state shedding velocity $V$ of water droplets on a liquid-impregnated surface which was substantially similar to the liquid-impregnated surface 200, was measured using a high-speed camera while systematically varying the impregnating liquid dynamic viscosity $\mu_o$, post spacing $b$, textured surface tilt angle $\alpha$, and droplet volume, $\Omega$. These measurements are shown in FIG. 11a where $V$ is plotted as a function of $\alpha$ for different $\mu_o$, $b$, and $\Omega$; the velocity $V$, increases with $\alpha$ and $\Omega$ as both increase the gravitational force acting on the droplet. As shown, $V$ decreases with $\mu_o$ and $\phi$ as both increase the resistance to droplet motion.

To explain these trends, it is first determined whether the water droplet is rolling or sliding. Consider the oil-water interface beneath the droplet as shown in FIG. 11b. The shear stress at this interface, on the water side, scales as $\tau x_w \sim \mu_w(V-V_i)/h_{cm}$ and on the oil side scales as $\tau_o \sim \mu_o V_i/t$, where $V_i$ is the velocity of the oil-water interface and $h_{cm}$ is the height of the centre of mass of the droplet above the solid surface, and $t$ is the thickness of the oil film. Since $\tau_w$ must be equal to $\tau_o$ at the oil-water interface, $\mu_w(V-V_i)/h_{cm} \sim \mu_o V_i/t$. Rearranging this gives:

$$V_i / V \sim \left(1 + \frac{\mu_o}{\mu_w} \frac{h_{cm}}{t}\right)^{-1} \qquad (12)$$

Since $(\mu_o/\mu_w)(h_{cm}/t) \gg 1$ as described herein, $V_i/V \ll 1$, i.e. the oil-water interface moves at a negligibly small velocity relative to that of the water droplet's centre of mass. This suggests that the water droplets being shed on the textured surface, for example, textured surface 210, are rolling. This was further confirmed by adding ground coffee particles to the water droplet and tracking their motion relative to the droplet with a high-speed camera as the water droplet moved across the surface. Particle trajectories, shown in FIG. 11c, clearly show that the water droplets roll across the liquid-impregnated surface as they are shed ($\mu_o$=96.4 cP).

To determine the magnitude of $V$, the rate of change of gravitational potential energy is balanced as the droplet rolls down the incline with the total rate of energy dissipation due to contact line pinning and viscous effects. The resulting energy balance gives:

$$V(F_g - F_p) \sim \mu_w \int_{\Omega_{drop}} (\nabla\overline{u})^2_{drop} d\Omega + \mu_o \int_{\Omega_{film}} (\nabla\overline{u})^2_{film} d\Omega$$
$$+ \mu_o \int_{\Omega_{ridge}} (\nabla\overline{u})^2_{ridge} d\Omega \qquad (13)$$

where $F_g$ and $F_p$ represent the net gravitational and pinning forces acting on the water droplet, the $\Omega$ terms are the volume over which viscous dissipation occurs, and the $\nabla\overline{u}$ terms are the corresponding velocity gradients. The form of Eq. (13) is similar to that for viscous contact liquid droplets rolling on completely non-wetting surfaces though additional terms are present due to the presence of the impregnated oil. The three terms on the right side of Eq. (13) represent the rate of viscous dissipation within the droplet (*I*), in the oil film beneath the droplet (*II*), and in the wetting ridge near the three-phase contact line (*III*).

The rate of viscous dissipation (i.e., the energy lost by the rolling droplet of the contact liquid due to its viscosity) within the water droplet (*I*) is primarily confined to the volume beneath its centre of mass and can be approximated as

$I \sim \mu_w(V/h_{cm})^2 R_b^2 h_{cm}$ , where $R_b$ is the base radius of the droplet. Applying geometrical relations for a spherical cap, $R_b/h_{cm} = g(\theta) = 4/3(\sin\theta)(2+\cos\theta)/(1+\cos\theta)^2$ results in :

$$I \sim \mu_w V^2 R_b g(\theta)$$

The rate of viscous dissipation within the film *(II)* can be approximated as $II \sim \mu_o (V_f/t)^2$. Since $(\mu_w/\mu_o)$ $(t/h_{cm})$ << 1, from Eq. (12) $\overline{\nabla u}_{film} \sim V_f/t \sim (\mu_w/\mu_o)(V/h_{cm})$. Using $h_{cm} = R_b/g(\theta)$ can be rewritten, such that:

$$II \sim \frac{\mu_w^2}{\mu_o} V^2 \big[g(\theta)\big]^2 t$$

Finally, the rate of viscous dissipation in the wetting ridge *(III)* can be approximated as $III \sim \mu_o (V/h_{ridge})^2 R_b h_{ridge}^2$ since fluid velocities within the wetting ridge must scale as the velocity of the centre of mass and vanish at the solid surface, giving velocity gradients that scale as $\overline{\nabla u}_{ridge} \sim V/h_{ridge}$, where $h_{ridge}$ is the height of the wetting ridge. Thus,

$$III \sim \mu_o V^2 R_b .$$

Noting that $F_g = \rho_w \Omega g g \sin\alpha$ and $F_p = \rho_w \Omega g \sin\alpha^*$ and dividing both sides of Eq. (13) by $R_b V \gamma_{wa}$ yields

$$Bo\big(\sin\alpha - \sin\alpha^*\big)f(\theta) \sim Ca\left\{g(\theta) + \big[g(\theta)\big]^2 \frac{\mu_w}{\mu_o}\frac{t}{R_b} + \frac{\mu_o}{\mu_w}\right\} \quad (14)$$

Where $Ca = \mu_w V/\gamma_{wa}$ , is the capillary number, $Bo = \Omega^{2/3}\rho_w g/\gamma_{wa}$ is the Bond number, and $f(\theta) = \Omega^{1/3}/R_b$ (described before herein). Since $(\mu_w/\mu_o)$ $(t/R_b)$ << 1, and $\mu_o/\mu_w$ >> $g(\theta)$ in our experiments, Eq. (14) can be simplified to:

$$Bo\big(\sin\alpha - \sin\alpha^*\big)f(\theta) \sim Ca\frac{\mu_o}{\mu_w} \quad (15)$$

The datasets shown in FIG. 11a were organized according to Eq. (15) and were found to collapse onto a single curve (FIG. 11d), demonstrating that the above scaling model captures the essential physics of the phenomenon: the gravitational potential energy of the rolling water droplet is primarily consumed in viscous dissipation in the wetting ridge around the base of the rolling droplet. Similar conclusions apply to solid spheres rolling on thin films of viscous oil. Furthermore, Eq. (14) and Eq. (15) apply for cloaked and uncloaked droplets, because inertial and gravitational forces in the cloaking films are very small. Consequently, the velocity is uniform across the film and viscous dissipation is negligible.

**Flow Rate of a Contact Liquid on a Liquid-Impregnated Surface**

The flow rate of contact liquid on a liquid-impregnated surface depends on the viscosity of the viscosity of the contact liquid, the viscosity of the impregnating liquid, the height of the solid features, the depth of the contact liquid (e.g., the height of the contact liquid above the liquid-impregnated surface). This can be understood by studying the flow of a contact liquid through a pipe or channel that includes a liquid-impregnated surface. Typically, flow through a pipe or channel, having a liquid-impregnated surface on its interior can be described by the following equation:

$$Q/(\Delta p/L) \sim (R^4/\mu_1)(1 + C(h/R)(\mu_1/\mu_2) \quad (16)$$

where Q is the volumetric flow rate, R is pipe radius, h is the height of the texture, $\mu_2$ is the viscosity of the impregnating liquid, and $\mu_1$ is the viscosity of the contact liquid flowing through the pipe. C is a constant that relates to the obstruction of the flow of the impregnating liquid due to the texture. C = 1 in the limit of infinitely sparse textures (no texture) approaches 0 for very tightly spaced textures. $\Delta p/L$ is the pressure drop per *L*. Note that $C^*h^*(\mu_1/\mu_2)$ defines a slip length, *b*. Without being bound to any particular theory, it is believed that $(h/R)(\mu_1/\mu_2)$ is greater than 1 for this to have a significant effect and this sets the height of the texture in relation to the viscosity ratio.

$$Power \sim (\Delta p / L) * Q$$

(here "~" means "scales as")

So equation (16) becomes:

$$\frac{Q^2}{Power} \sim \left(\frac{R^4}{\mu_1}\right)\left[1 + C\left(\frac{t}{R}\right)\left(\frac{\mu_1}{\mu_2}\right)\right] \qquad (17)$$

Then the ratio of the flow rate of a liquid without the coating to one with the coating, at the same pumping power, is:

$$\frac{Q_{coated}}{Q_{uncoated}} \sim \left[1 + C\left(\frac{h}{R}\right)\left(\frac{\mu_1}{\mu_2}\right)\right]^{1/2} \qquad (18)$$

Or the reduction in power require to achieve the same flow rate is:

$$\frac{P_{coated}}{P_{uncoated}} \sim \left[1 + C\left(\frac{h}{R}\right)\left(\frac{\mu_1}{\mu_2}\right)\right]^{-1} \qquad (19)$$

If h<<R, then the flow of the product also drags the material within the film at a flow rate $Q_f$ given by:

$$Q_f/Q = h/R[2b/R+(b/R)^2]/[1/2+2b/R+(b/R)^2] \qquad (20)$$

*If b/R << 1 then:*

$$Q_f/Q \sim 4hb/R^2 \; (valid \; for \; h< R \; and \; b/R) \qquad (21)$$

Although modeled for pipe flow, the general principals also apply to open systems, for example, product containers, where R is replaced with the characteristic depth of the flowing material. The average velocity of the flow ~ Q/A, where A is the cross-sectional area of the flowing fluid.

For example, mayonnaise, which is a Bingham plastic, has a viscosity that approaches infinity at low shear rates (it is non-Newtonian), and therefore behaves like a solid as long as shear stress within it remains below a critical value. Whereas, for honey, which is Newtonian, the flow is much slower. For both systems, h and R are of the same order of magnitude, and $\mu_2$ is the same. However, since

$$\mu_{honey} << \mu_{mayonnaise}, \; then \; (h/R)(\mu_{honey}/\mu_2) << (h/R)(\mu_{mayonnaise}/\mu_2)$$

thus mayonnaise flows much more quickly out of the bottle than honey. Therefore, to increase the flow rate of honey, an impregnating liquid can be selected that has a lower viscosity $\mu_2$ such that the ratio $\mu_{honey}/\mu_2$ increases, and thereby the flow rate of the contact liquid over the liquid-impregnated surface increases. In some embodiments, $\mu_1/\mu_2$ can be greater than about 1, about 10, about $10^3$, about $10^6$, about $10^9$.

**Durability Enhancement**

As described herein, the impregnating liquid included in a liquid-impregnated surface can get entrained in a contact liquid (e.g., any of the contact liquids described herein), which is contacting the liquid-impregnated surface. The definition of "entrainment" hereinafter refers to the loss of the impregnating liquid from the liquid-impregnated surface due to the shear stress of the contact liquid which may or may not be miscible with the impregnating liquid. This shear stress results in a flow of impregnating liquid at a flow rate $Q_f$ described before herein, and this causes the impregnating liquid to be gradually depleted from the liquid-impregnated surface. In some embodiments, the impregnating liquid can be depleted by gradual dissolution into the contact liquid or by evaporation. In some embodiments, the impregnating liquid can be drained via gravitation forces or buoyant forces. To increase durability of the liquid impregnated surface, for example, the liquid-impregnated surface 100 and/or 200, the extent of dissolution and/or evaporation of the impregnating liquid can be minimized, the quantity of impregnating liquid entrained in the contact liquid can be reduced, the amount of drainage by gravitational or buoyant forces can be reduced, and/or the impregnating liquid can be continuously or periodically replenished.

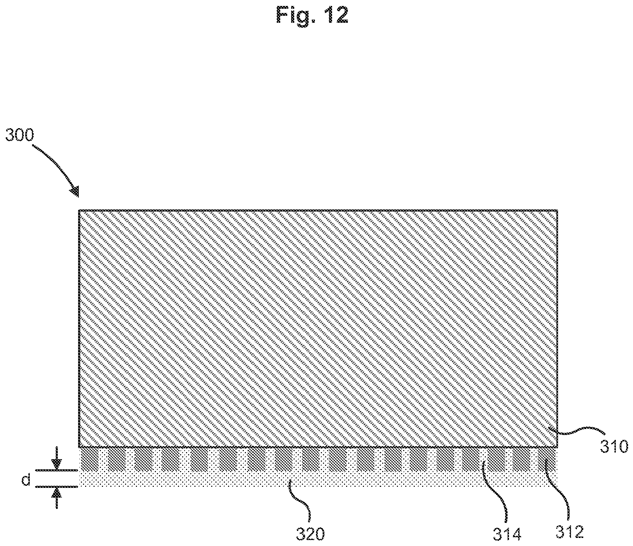

In some embodiments, a liquid-impregnated surface can include enough impregnating liquid impregnated in the textured surface such that impregnating liquid overflows and substantially tops the textured surface. FIG. 12 shows a liquid-impregnated surface 300 that includes a surface 310 that has a plurality of solid feature 312 disposed on the surface 310. The interstitial region 314 between the plurality of solid features 312 are impregnated with an impregnating liquid 320, for example, silicone oil, BMIm, or any of the impregnating liquids described herein. An excess quantity of the impregnating liquid 320 is impregnated into the textured surface 320, such that impregnated liquid 320 overflows or tops, over the solid features 312 by a height d. In some embodiments, the height d of the impregnated liquid 320 above the solid features 312 of the textured surface 310 can be at least about 1 $\mu$m. The excess impregnating liquid 320 can, for example, ensure that it takes a substantially long time to remove all the impregnating liquid 320 by, for example a contacting liquid, therefore increasing the durability of the liquid impregnated surface 300.

In some embodiments, a liquid delivery mechanism can be fluidically coupled to a liquid-impregnated surface and configured to transfer impregnating liquid to interstitial regions between the solid features included in the liquid-impregnated surface. In some embodiments, the liquid delivery mechanism can include a reservoir of impregnating liquid. The reservoir can be fluidically couple to the liquid impregnated surface to provide a continuous replenishing supply of the impregnating liquid.

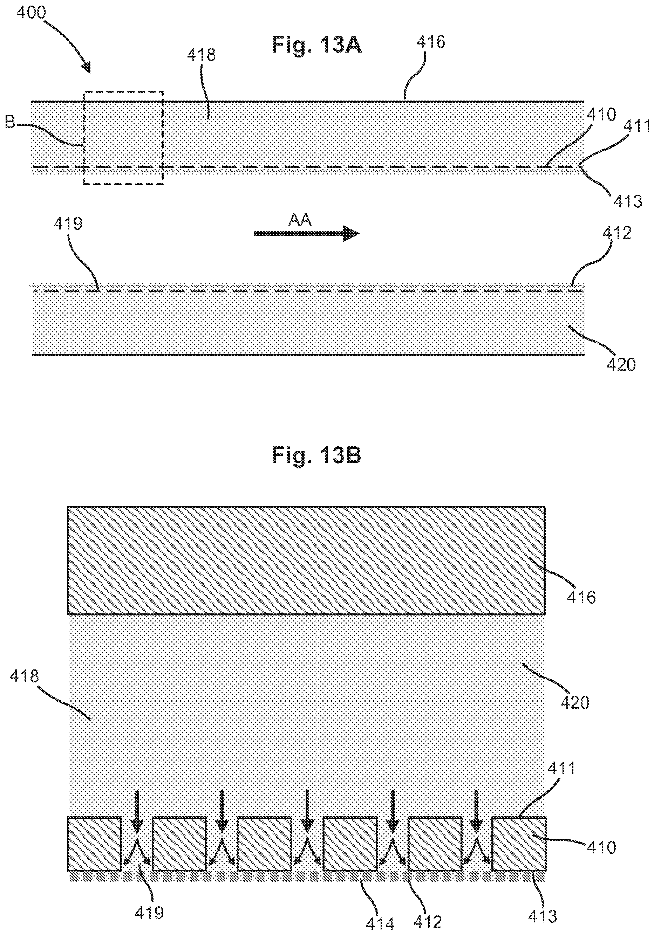

FIGS. 13A and 13B show an apparatus 400 that includes a first substrate 410 and a second substrate 416. The first substrate 410 has a plurality of solid features 412 disposed on a first surface 413 of the first substrate 410 such that the plurality of solid features 412 define interstitial regions 414. In some embodiments, the material of solid feature 412 may be the same as the first substrate 410. The interstitial regions 414 are sized and shaped to remain impregnated by impregnating liquid 420 disposed therein with capillary forces. A second surface 411 of the first substrate 410 is spaced apart from the second substrate 416 such that the second surface 411 of the first substrate 410 and the second substrate 416 define an interior region 418, for example, a reservoir, for containing and storing the impregnating liquid 420. FIG. 13B shows an enlarged view of a region of the apparatus 400 shown by arrow B. As shown, the first substrate 410 includes a plurality of pores 419 which fluidically couple the first surface 413 with the second surface 411 of the first substrate 410, such that interior region 418 is fluidically coupled with the interstitial region 414 of the solid features 412. Therefore, any impregnating liquid 420 lost from the textured surface 413 of the first substrate 410, is replaced by impregnating liquid 420 from the interior region 418. In some embodiments, the plurality of pores 419 are configured such that the impregnating liquid 420 can flow from the interior region 418 to the interstitial region 414 through capillary action. In some embodiments, the first surface 413 of the first substrate 410 can have a first roll angle. The impregnating liquid 420 can be disposed in the interstitial region 414 of the plurality of solid features 412, such that the impregnating liquid 420 defines a third surface having a second roll angle less than the first roll angle, therefore forming a non-wetting surface.

In some embodiments, the apparatus 400 can be a pipe, for example, as shown in FIG. 13A, such that first substrate 410 can form the side walls of a pipe, and the second substrate 416 can form the sidewalls of a surface surround the outside of the substrate 410. In such embodiments, the first surface 413 of the first substrate 410 defines a conduit to allow flow of a contact liquid as shown by the arrow AA. Furthermore, the interior region 418 can be defined by a space (such as an annular region) between the first substrate 410 and the second substrate 416. In some embodiments, the first substrate 410 can be configured to contain a contact liquid, such that the impregnating liquid 420 disposed in the interstitial regions 414 defines a third surface, in contact with said contact liquid. In some embodiments, the apparatus can be a container.

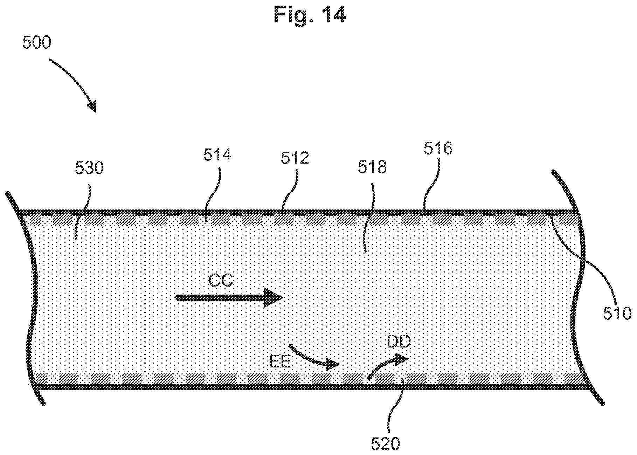

In some embodiments, a container can also include a liquid-impregnated surface. FIG. 14 shows a portion of a container 500 that includes an interior surface 510 and an exterior surface 516 which define an internal region 518 for containing a liquid mixture 530. A plurality of solid features 512 are disposed on the interior surface 510 defining interstitial regions 514 configured to receive an impregnating liquid 520. The interstitial regions 514 remain impregnated by impregnating liquid 520 by capillary forces. The liquid mixture 530 disposed in the interior region 518 of the container is configured such that the liquid mixture 530 includes the impregnating liquid 520 emulsified or dissolved therein, such that the liquid mixture 530 can supply impregnating liquid 520 to the interstitial region 514. For example, the interior surface 510 can have a first roll off angle and the impregnating liquid 520 impregnating the interstitial regions 514 defines a contact surface in contact with the liquid mixture 530 having a second roll of angle, such that the second roll of angle is less than the first roll of angle. A flow of the liquid mixture 530 disposed in the container 500 as indicated by the arrow CC can remove a portion of the impregnating liquid 530 from the interstitial region 514 as shown by the arrow DD. The liquid mixture 530 is formulated to contain and supply impregnating liquid to the interstitial regions 514 to maintain the second roll off angle less than the first roll of angle. The liquid mixture 530 can therefore replace the lost impregnating liquid 520 to the interstitial regions 514, as shown by the arrow EE, thus increasing the life of the liquid impregnated surface of the container 500.

In some embodiments, the liquid mixture 530 can be a multiphase liquid. In some embodiments, the multiphase liquid can be formulated such that when a temperature of the interior surface 510 of the container 500 changes from a first temperature to a second critical temperature, the multiphase liquid becomes unstable and separates into two distinct bulk phases. In some embodiments, the liquid mixture 530 can be formulated to be transition into an unstable supersaturated condition such that nucleation of the impregnating liquid is induced on the interior surface. In such embodiments, the interior surface 510 can be held at a temperature such that the solubility of the impregnating liquid in the contact liquid the temperature of the interior surface 510 is less than the concentration of the impregnating liquid material, hence resulting in a supersaturated contact liquid and inducing nucleation of the impregnating liquid onto the surface.

In some embodiments, the interstitial regions 514 can be resupplied with the impregnating liquid 520 by condensation of the impregnating liquid 520 from a vapor phase in contact with the interior surface 510. In such embodiments, the interior surface 510 can be held at a temperature such that the saturation concentration at the temperature of the interior surface 510 is less than the concentration of the impregnating liquid material in the vapor. In some embodiments, a non-solvent can be added to the impregnating liquid 520 to reduce its solubility below the concentration at which the non-solvent was dissolved.

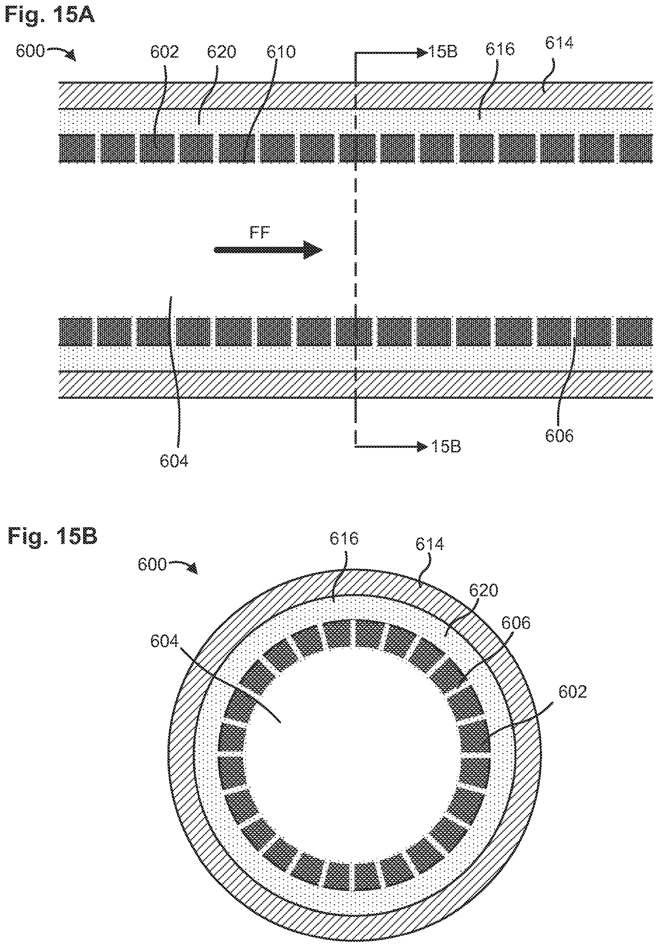

In some embodiments, an apparatus can include a pipe or conduit that includes a liquid-impregnated surface and a reservoir of impregnating liquid disposed concentrically around the pipe or conduit. Referring now to FIGS. 15A and 15B, an apparatus 600 can include a pipe 602 having a first diameter or otherwise cross-section. The pipe 602 defines an interior region 604 therethrough configured to allow a contact liquid, for example, any of the contact liquids described herein, to flow through the interior region 604, for example, in a direction shown by the arrow FF. A plurality of through holes or interconnected pores or cavities 606 are defined on a sidewall of the pipe 602. The through holes 606 can have a cross-section which is circular, square, rectangular, polygonal, oval, or any other suitable shape. In some embodiments, the through holes 606 can be tapered, chamfered, or contoured. In some embodiments, the through holes 606 can be sized and shaped, or given an appropriate chemistry, to allow an impregnating liquid 620 to pass therethrough, but prevent the contact liquid from passing through the through holes 606, as described herein. In some embodiments, the pores 606 can have a diameter, or characteristic dimension, or otherwise cross-section of about 10 nm, 100nm, 1 $\mu$m, 2 $\mu$m, 4 $\mu$m, 6 $\mu$m, 8 $\mu$m, 10 $\mu$m, 20 $\mu$m, 30 $\mu$m, 40 $\mu$m, 50 $\mu$m, 60 $\mu$m, 70 $\mu$m, 80 $\mu$m, 90 $\mu$m, 100 $\mu$m, 200 $\mu$m, 300 $\mu$m, 400 $\mu$m, 500 $\mu$m, 600 $\mu$m, 700 $\mu$m, 800 $\mu$m, 900 $\mu$m, 1 mm, 5 mm, or about 10 mm, inclusive of all ranges therebetween. The through holes/pores 606 can be formed through a suitable process such as, for example, drilling, etching, pricking, laser cutting, machining, punching, molding, printing, or formed through any other suitable process of combination thereof. In some embodiments the porous material surface is the plurality of solid features making up the liquid-impregnated surface. In some embodiments, the pipe 602 can be formed from an inherently porous material, for example, ceramics, polymers, fibers, any other suitable porous material of combination thereof. An inner surface 610 of the pipe 602 can include a plurality of solid features which are impregnated with the liquid-impregnated surface 620 to define a liquid-impregnated surface. The through holes 606 can be formed prior to disposing solid features of the liquid-impregnated surface on the inner surface of the side wall of the pipe, or after the solid features have been disposed.

A sheath 614 is disposed around the pipe 602 and can have a length substantially similar to a length of the pipe 602, or any length less than the length of the pipe 602, for example a length much shorter than the length of the pipe. The region between sheet 614 and pipe 602 defines a reservoir 616. The impregnating liquid 620 is disposed in the space 616 such that the impregnating liquid 620 is fluidically coupled with the liquid-impregnated surface disposed on the inner surface 610 of the sidewall of the pipe 602 via the through holes 606. In this manner, the sheath 614 is configured to form a reservoir of the impregnating liquid 620 around the pipe 602. The ends of the sheath 614, can for example, be closed with plugs (e.g., stoppers, rubber gaskets, sealing rings, flanged bushing, adhesives, etc.) to prevent the impregnating liquid 620 from leaking from the ends of the sheath 614. Any impregnating liquid 620 lost from the liquid-impregnating surface, for example, due to shearing or entrainment within the contact liquid, can be replaced by the impregnating liquid 620 from the space 616. In some embodiments, the impregnating liquid 620 can be communicated from the space 616 to the liquid-impregnated surface in a passive manner, for example, by capillary action, venturi effect, pressure difference, or gravity flow. The through holes 606 can be sized and shaped to control a flow rate and/or pressure of the impregnating liquid 620 to the liquid-impregnated surface. In some embodiments, an active pumping mechanism can be used to communicate the impregnating liquid 620 from the space 616 to the liquid-impregnated surface. Such pumping mechanisms can includes, for example, a centrifugal pump, a gravity pump, a siphon pump, a peristaltic pump, a diaphragm pump, syringe pump, an air pump, a vacuum pump, a manual hand pump, or any other suitable pumping mechanism. Furthermore, instrumentation, for example, flow valves, flow meters, controllers, PID controllers, pressure gauges, or any other instrumentation can be used to control the flow rate of the impregnating liquid 620 to the liquid-impregnated surface. For example, the flow rate of the impregnating liquid 620 can be adjusted to ensure that the solid features are completely impregnated with the impregnating liquid 620. The pumping mechanism can also be in communication with an external reservoir of the impregnating liquid 620 and communicate impregnating liquid 620 from the external reservoir to the space 616. In some embodiments, a positive pressure can be exerted on the impregnating liquid 620 contained in the space 616 to prevent the contact liquid from flowing into the space 616 through the through holes 606. In some embodiments, the pressure can be controlled, for example, to provide a desired flow rate of the impregnating liquid 620 to the liquid-impregnated surface. While shown as having the sheath 614, in some embodiments, the apparatus 600 can include a tee, a wye, a membrane, a coupling vessel, an inline mixer, or a tank which can provide a reservoir of the impregnating liquid 620.

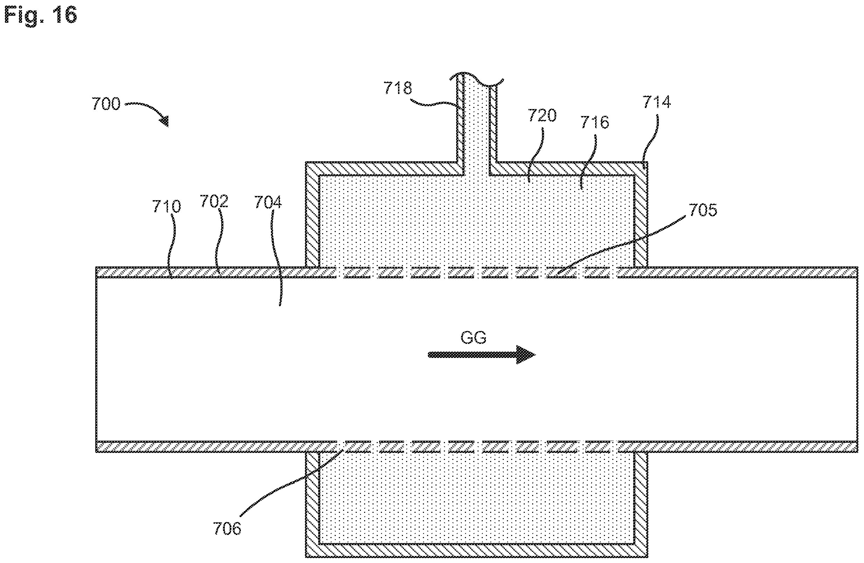

In some embodiments, an apparatus can include a pipe or a conduit that includes a liquid-impregnated surface and a reservoir of impregnating liquid disposed concentrically around only a portion of the pipe or conduit. For example, FIG. 16 shows a side cross-section view of a portion of an apparatus 700. The apparatus 700 includes a pipe 702 having a first diameter or otherwise cross-section. The pipe 702 defines an internal volume 704 configured to allow a contact liquid, for example, any of the contact liquids described herein to flow through the internal volume, as shown by the arrow GG. A plurality of through holes 706 are disposed on a portion 705 of the sidewall (also referred to as "the through hole portion") of the pipe 702. The through holes 706 can be substantially similar to the through holes 606 described with respect to the apparatus 600, and therefore not described in further detail herein. An inner surface 710 of the pipe 702 can include a plurality of solid features which are impregnated with the impregnating liquid 720 to define a liquid-impregnated surface.

A tee 714 is disposed concentrically around the through hole portion 705. The tee 714 has a second diameter substantially larger than the first diameter of the pipe 702 such that the sidewall of the pipe 702 and the tee 714 define a reservoir 716 therebetween for containing a replenishing supply of the impregnating liquid 720. The reservoir 716 is in fluid communication with the liquid-impregnated surface disposed on the inner surface 710 of the through hole portion 705 via the through holes 706. In this manner, the tee 714 is configured to form a concentric reservoir 716 of the impregnating liquid 720 around the portion of the pipe 702 that includes the through holes 706. Any impregnating liquid lost from the liquid-impregnating surface, for example, due to shearing or entrainment within the contact liquid can be replenished from the reservoir 716 to the liquid-impregnated surface. The replenishing impregnating liquid 720 can diffuse via capillarity to the portions of the liquid-impregnated surface that are not serviced by the through holes 706 such that an approximately constant level of the impregnating liquid 720 is maintained throughout the liquid-impregnated surface (i.e. the emerged area fraction, $\phi$ is maintained). The tee 714 can be fluidically coupled to an external reservoir (not shown) of the impregnating liquid 720 via a conduit 718. In this manner, the reservoir 716 can maintain a constant supply of the impregnating liquid 720. In some embodiments, the impregnating liquid 720 can be communicated from the reservoir 716 to the liquid-impregnated surface in a passive manner, for example, by capillary action, venturi effect, pressure difference, or gravity flow. In some embodiments, an active pumping mechanism can be used to communicate the impregnating liquid 720 from the reservoir 716 to the liquid-impregnated surface. Such pumping mechanisms can includes, for example, a gravity pump, centrifugal pump, air pump, vacuum pump, syringe pump, a siphon pump, a peristaltic pump, a manual hand pump, or any other suitable pumping mechanism. Furthermore, instrumentation, for example, flow valves, flow meters, controllers, PID controllers, pressure gauges, or any other instrumentation can be used to control the flow rate of the impregnating liquid 720 to the liquid-impregnated surface. For example, the flow rate of the impregnating liquid 720 can be adjusted to ensure that the solid features are completely impregnated with the impregnating liquid 720. The pumping mechanism can also be in communication with an external reservoir of the impregnating liquid 720 and communicate impregnating liquid 720 from the external reservoir to the space 716. While shown as having a single through hole portion 705, in some embodiments, the pipe 702 can include a plurality of through hole portions. The through hole portions can be located at predetermined locations along the length of the pipe 702. Each through hole portion can have a tee 714 disposed around the through hole portion. Each of the tees 714 can be configured to provide a reservoir of the impregnating liquid 720 around each of the through hole portions as described herein. In this manner, the impregnating liquid 720 can be supplied to the liquid-impregnated surface at predetermined locations along the entire length of the pipe 702. In some embodiments, the liquid delivery mechanism can be located intermittently along a section of the pipe 702 in order to maintain the liquid-impregnated surface. In some embodiments, the liquid delivery mechanism and impregnating liquid 720 can be supplied at different locations and heights in a storage tank, vessel, or any apparatus and/or process equipment that requires a replenishing supply of impregnating liquid 720. The replenishing impregnating liquid 720 from each through hole portion 705 can diffuse to locations of the liquid-impregnated surface that do not have through holes 706, such that an approximately constant level of impregnating liquid 720 can be maintained throughout the liquid-impregnated surface. While shown as having the tee 714, in some embodiments, the apparatus 700 can include a jacket, a wye, a membrane, coupling vessel or tank, or any combination thereof which can provide a reservoir of the impregnating liquid 720.

In some embodiments, an inner surface of the pipe 702 or any other pipe described herein can be mechanically etched by sand blasting to form a plurality of solid features. Then a series of pores or through holes can be mechanically drilled into a side wall of the pipe 702. A jacket or tee that forms a reservoir of the impregnating liquid 720 can be disposed over the pores to create the liquid delivery mechanism. In some embodiments, the inner surface of the pipe 702 can be surface modified after mechanical etching, for example, by sputter coating to alter a surface energy of the solid features.

In some embodiments, the solid features included in the liquid-impregnated surface can be configured to define through holes therethrough, for example, the through holes 606, or 706 described with respect to the apparatus 600 or 700. For example, in some embodiments, the solid features can include honeycomb like structures such that the edges of each honeycomb structure serves as the solid feature (e.g., serve as fins having a height of about 2 $\mu$m, 5 $\mu$m, 10 $\mu$m, or up to about 200 $\mu$m) and through holes are defined within the portion surrounded by the edges. In some embodiments, the solid features can include square posts or tapered posts with through holes defined in the interstitial space between the posts proximate to the base of the posts. In some embodiments, the solid features can include grooves, for example, continuous grooves or patterned grooves (e.g., analogous to tire treads) with through holes (e.g., micropores, slits, or holes) bisecting the groove that are in fluid communication with a reservoir of the impregnating liquid. In some embodiments, the solid features can include rings, circles, oval, cylinders, tubes, raised cups, meshes, diamonds, or any other polygonal shaped solid features that have a hollow core such that the solid features define a through hole therethrough.

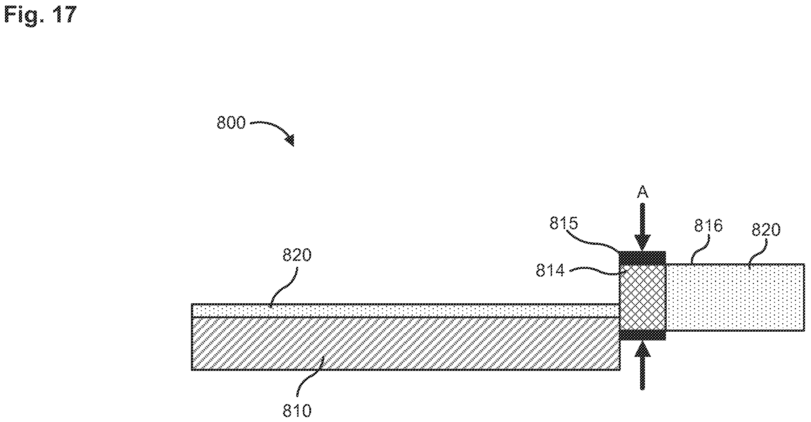

In some embodiments, a liquid resupply mechanism can include a sponge. Referring now to FIG. 17, an liquid-impregnated surface 800 includes a surface 810, that includes a plurality of solid features (not shown for clarity) and an impregnating liquid 820 disposed in the interstitial regions defined by the solid features. The surface 810, the solid features and the impregnating liquid 820 can include any of the surfaces, solid features or impregnating liquids described herein. A sponge 814 is disposed at one end of the surface 810. The sponge 814 is coupled to a reservoir 816 of the impregnating liquid 820, such that reservoir 816 is in fluidic communication with the liquid-impregnated surface via the sponge 814. A compression mechanism 815 is coupled to the sponge 814. The compression mechanism 815 can be configured to compress the sponge 814 as shown by the arrow A periodically or on demand to communicate a replenishing supply of the impregnating liquid 820 to the liquid-impregnated surface 800.

The sponge resupply mechanism can, for example, be used to resupply impregnating liquid to a paint tray that includes a liquid-impregnated surface disposed thereon. The liquid resupply mechanism shown in FIG. 17 can be used to manually supply impregnating liquid to the liquid-impregnated surface before the paint is poured. The paint can be poured off after use, and the sponge can be compressed again to resupply the impregnating liquid before the paint is poured again onto the tray. In some embodiments, the liquid-impregnated surface can be disposed on the inner surface of a laundry detergent cap. In such embodiments, the sponge liquid delivery mechanism can be brought into contact with a portion of the liquid-impregnated surface and compressed to communicate fresh impregnating liquid. This can be done between pouring cycles of the laundry detergent. In such embodiments, the sponge can be manually brought into contact with the surface by the user or the sponge can be disposed at the opening of the laundry container such that the sponge gets compressed each time the laundry detergent cap is screwed on to the container.

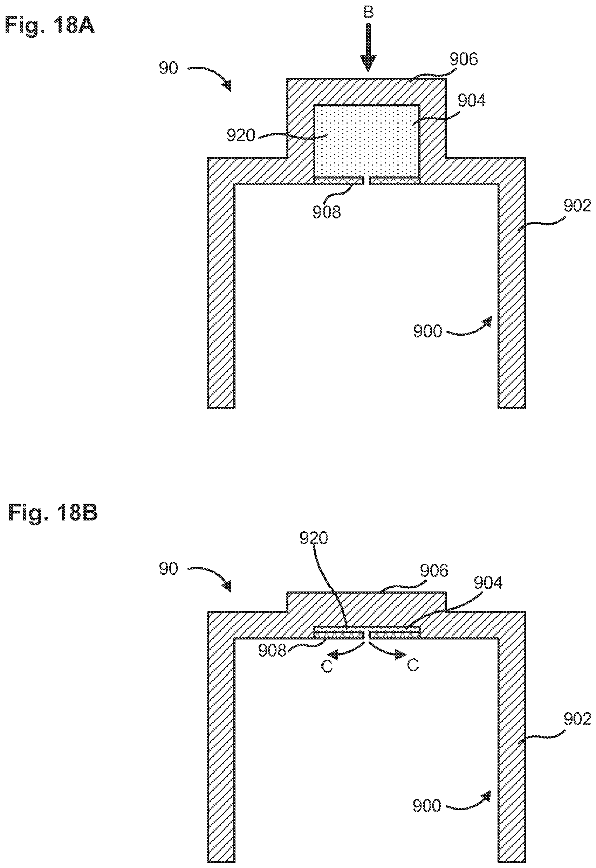

In some embodiments, a container for holding a contact liquid can include a liquid delivery mechanism that can be activated on demand. Referring now to FIGS. 18A and 18B, a container 90 (e.g., a cap of a detergent bottle) includes a side wall 902. A liquid-impregnated surface 900 (e.g., any of the liquid-impregnated surfaces described herein) is disposed on an internal surface of the side wall 902 of the container 90. A reservoir 904 that contains a volume of impregnating liquid 920 is disposed on the side wall 906, for example, a base of the container 90. The reservoir includes a deformable portion 906 that can be deformed, for example, bent or otherwise displaced by the application of pressure. A valve 908, for example, a septum, a butterfly valve, a pressure valve, or any other suitable valve is disposed at the base of the reservoir 904. The valve 908 can be configured to prevent the volume of impregnating liquid 920 from being communicated into the internal volume defined by the container 90, until a pressure of the impregnating liquid 920 increases above a certain threshold. For example, in a first configuration shown in FIG. 18A, the reservoir 904 can be filled with a supply of the impregnating liquid 920. A user can apply a force in the direction shown by the arrow B, on the deformable portion 906 to urge the container into a second configuration as shown in FIG. 18B. In the second configuration, the deformable portion 906 deforms thereby reducing a volume of the reservoir 904. This exerts a pressure on the impregnating liquid 920 disposed within the reservoir 904. This pressure can be sufficient for the impregnating liquid 920 to be expelled from the valve 908 as shown by the arrows C, and thereby resupply impregnating liquid to the liquid-impregnated surface 900.

In some embodiments, an apparatus can include a first pipe or conduit having an inner diameter. The apparatus can also include a second pipe or conduit having an outer diameter which is substantially similar to the inner diameter of the first pipe such that the second pipe can fit into a lumen of the first pipe with close tolerance. A liquid-impregnated surface as described herein can be disposed on an inner surface of a sidewall of the second pipe, which presents a non-wetting surface to a contact liquid flowing through a lumen of the second pipe. The sidewalls of the second pipe can be hollowed, grooved, roughened, or otherwise textured, such that a reservoir for holding a replenishing supply of an impregnating liquid is formed between the first pipe and the second pipe. Furthermore, a through hole or holes can be defined through the sidewalls of the second pipe to allow a replenishing supply of impregnating liquid to be communicated from the reservoir to the liquid-impregnated surface, where impregnating liquid also flows into the reservoir from an external supply (not shown). In some embodiments, the impregnating liquid can be communicated from the reservoir to the liquid-impregnated surface in a passive manner, for example, by capillary action, venturi effect, pressure difference, or gravity flow. In some embodiments, an active pumping mechanism can be used to communicate the impregnating liquid from the reservoir to the liquid-impregnated surface. Such pumping mechanisms can include, for example, a gravity pump, a siphon pump, a peristaltic pump, a manual hand pump, air pump, or any other suitable pumping mechanism. Furthermore, instrumentation, for example, flow valves, flow meters, pressure transmitters, controllers, or any other instrumentation can be used to control the flow rate of the impregnating liquid to the liquid-impregnated surface.

In some embodiments, an apparatus can include a pipe or conduit that includes a reservoir of impregnating liquid coupled to an end of the pipe and another pipe, fitting, or container. For example, in some embodiments, the pipe or otherwise conduit can be a seamless pipe that includes a liquid-impregnated surface disposed on an inner surface of the pipe. A reservoir of the impregnating liquid can be coupled to the upstream end or an upstream portion of the pipe, for example, via flanges, fittings, or any other suitable coupling mechanism. The reservoir can be used to supply the impregnating liquid to the liquid-impregnated surface continuously or on demand. In some embodiments, the reservoir can be an interchangeable or disposable flange fitting that contains a predetermined quantity of the impregnating liquid. The impregnating liquid can be communicated to the liquid-impregnated surface until the impregnating liquid is consumed from the flange fitting. The reservoir can then be replaced with another flange fitting reservoir or refilled with the impregnating liquid, for example, during a scheduled maintenance of the pipe. In some embodiments, a gap between two the ends of two pipes can include the aforementioned through hole (e.g., a slit) through which the impregnating liquid flows. The gap for example could be maintained by holding the pipes in place with a T, where a spacer is holds the pipes apart by the defined gap space (for example 0.1 mm to 1mm).

In some embodiments, a pressurized delivery system can be used to resupply impregnating liquid to a liquid-impregnated surface disposed on an inner surface or a pipe, conduit, container, or any other surface. For example, a high powered jet, blower, spray gun, or any other suitable pressurized delivery system can be disposed at an upstream or a downstream end of the pipe, rim of a mixing tank, above a conveyor, at the hopper, or at the opening of a container, that include the liquid-impregnated surface. The pressurized delivery system can be configured to deliver a high pressured jet or blast of the impregnating liquid such that any contact liquid disposed on the liquid-impregnated surface, is pushed away from the liquid-impregnated surface and the replenishing impregnating liquid is communicated to the liquid-impregnated surface. In some embodiments, the apparatus can include a return to allow the excess impregnating liquid to be communicated away from the surface, for example, to an external reservoir. For example, the impregnating liquid can be drawn out of the surface via gravity, capillary action, a pumping mechanism (e.g., a positive pressure pump, a siphon pump, etc.) or any other suitable mechanism can be used to remove the excess impregnating liquid from the surface.

In some embodiments, the impregnating liquid can also be supplied through nucleation, such as by condensation from a vapor phase, or by direct nucleation of impregnating liquid from a contact liquid solution that includes the impregnating liquid. In some embodiments, the flow of impregnating liquid can also be osmotically drive, or driven via a concentration gradient. In some embodiments, the wetting ridge of impregnating liquid in front of the contact liquid can replenish interstitial regions of plurality of features, as it passes over a interstitial regions that are partially depleted of impregnating liquid.

In some embodiments, a liquid-impregnated surface can include an impregnating liquid can be a ferromagnetic liquid, i.e., a liquid that has magnetic properties (e.g., an impregnating liquid that includes ferrous or magnetic micro or nano particles). In such embodiments, the solid features can be magnetic or non-magnetic. A magnetic field can be used to stabilize the ferromagnetic impregnating liquid within and/or on the solid features. Furthermore, the magnetic field can be configured to maintain a replenishing supply of the ferromagnetic impregnating liquid within the interstitial regions defined by the solid features. For example, the magnetic field can magnetically pull an excess volume of the ferromagnetic impregnating liquid over the solid features by dragging the magnetic field over the liquid-impregnated surface. In some embodiments, the liquid-impregnated surface that includes the ferromagnetic impregnating liquid can be disposed on the inner surface of a side wall of a container. In such embodiments, the magnetic field can be used to resupply the ferromagnetic impregnating liquid to the inner surface of the container in a rapid manner. The container can include a detergent cup, a vessel, a tank, or any other container described herein. After the replenishing supply of the ferromagnetic liquid has been supplied to the liquid-impregnated surface, the magnetic field can be removed such that the replenishing supply of the ferromagnetic impregnating liquid is retained within the interstitial regions defined by the solid features included in the liquid-impregnated surface.

**Separation of entrained impregnating liquid that is entrained by the contact liquid**

Any of the impregnating liquid supply systems described herein, can also be configured to withdraw impregnating liquid, thereby separating the impregnating liquid from the contact liquid, prior to exiting the pipe. This separation device can be placed at the end of a pipe or end of a region of the pipe having the liquid impregnated surface. This can reduce the amount of liquid that is released with the contact liquid at the exit of the pipe. The mechanism by which the impregnating liquid is depleted from the surface can be passive (such as through capillarity) or active, such as pumping the liquid away from the surface (e.g., by maintaining a reservoir pressure that is less than the pressure within the pipe). To prevent the contact liquid from passing through the hole or through holes to the liquid reservoir, the holes can be dimensioned to be sufficiently small to increase the breakthrough pressure (i.e., the pressure differential required to overcome capillary pressure differences). Alternatively, the holes could be larger, provided that the plurality of solid features disposed over the holes (e.g., a mesh) have very small pores to increase the breakthrough pressure. It is also desirable that $\theta_{1s(w)} < \theta_c$ for s being the pipe material and additionally desirable for $\theta_{1s(w)} < \theta_c$ for s being the material comprising the plurality of features.

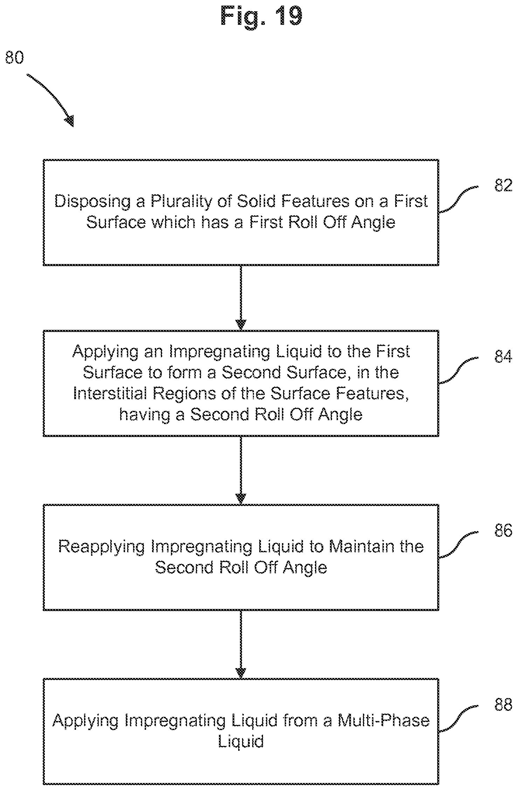

A liquid-impregnated surface (e.g., the liquid-impregnated surfaces 100, 200 or any other liquid impregnated surfaces described herein) can be formed using various methods. FIG. 19 illustrates a flowchart of an exemplary method 80 for forming a liquid-impregnated surface. In some embodiments, a method 80 of forming a liquid-impregnated surface includes disposing a plurality of solid features on a first surface which has a first roll off angle, 82. For example, the solid features can be formed through a top down fabrication process, spray coating, dip coating, spin coating or any other process describes herein. An impregnating liquid is applied to the first surface, 84 such that the impregnating liquid fills the interstitial regions between the plurality of solid features and forms a second surface having a second roll off angle less than the first roll off angle. The impregnating liquid can be applied using spray coating, dip coating, spin coating, pouring, vapor deposition method or through any other method described herein. The method further includes reapplying the impregnating liquid to maintain the second roll off angle, 86 of the second surface less than the first roll off angle. This can, for example, maintain the super hydrophobicity or non-wettability of the liquid-impregnated surface. Optionally, the impregnating liquid can be applied from a liquid mixture in contact with the impregnating liquid disposed in the interstitial regions, 88. The liquid mixture can be used to apply the impregnating liquid for the first time or replenish a quantity of impregnating liquid disposed in the interstitial region of the plurality of solid features formed on a solid surface. In some embodiments, the impregnating liquid can be reapplied from a liquid delivery mechanism which can be fluidically coupled with the interstitial regions of the liquid-impregnated surface. In some embodiments, the liquid delivery mechanism can be fluidically coupled with the interstitial regions by capillary action. In some embodiments, the liquid delivery mechanism can be fluidically coupled with the interstitial regions by a pressure differential (e.g., a pressure difference created by a pumping mechanism), or a combination thereof.

The following shows various examples of liquid-impregnated surface and a liquid-resupply mechanism. These examples are only for illustrative purposes and are not intended to limit the scope of the present disclosure.

**Liquid-Impregnated Surface Including Solid Features Formed from Beeswax**

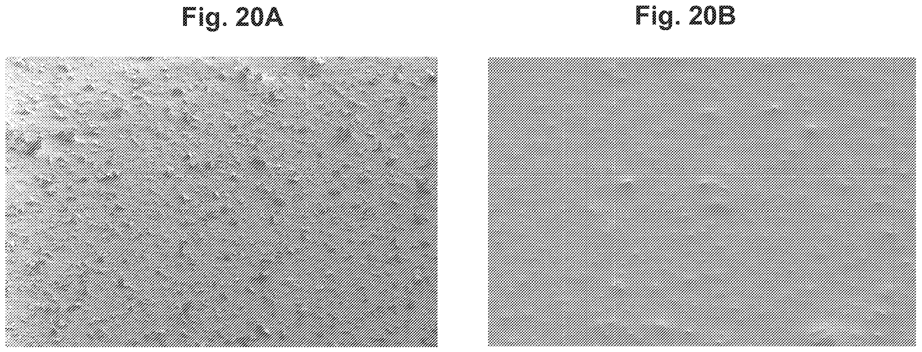

FIG. 20A shows an SEM image of a liquid-impregnated surface that includes a PET surface. A suspension of beeswax in ethanol was sprayed over the PET surface. The ethanol was allowed to evaporate leaving behind particles of beeswax disposed on the PET surface to form the solid features. An impregnating liquid was then sprayed on the PET surface to form the liquid-impregnated surface. FIG. 20B shows the impregnating liquid disposed within and on the beeswax particles. Extremely low $\phi$ was observed and the impregnating liquid was disposed on substantially all of the solid features.

**Hierarchical Solid Features on an Aluminum Surface Formed by Etching**

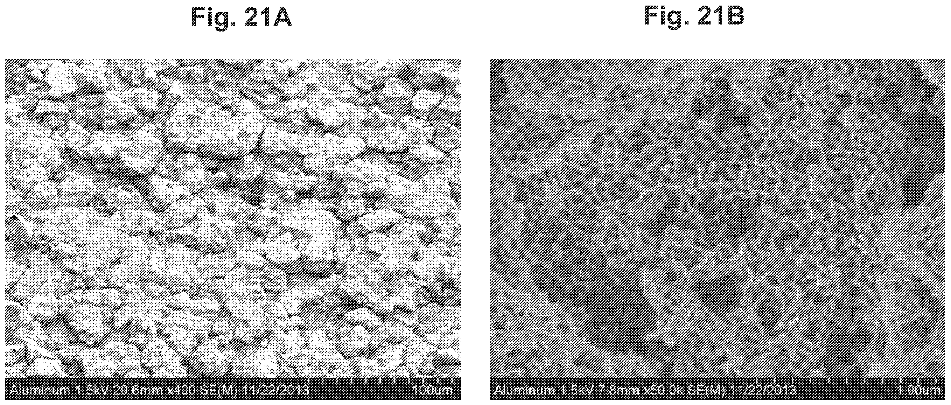

An aluminum surface was chemically etched in an acidic solution to roughen the surface and form solid features (i.e., texture). The surface was cleaned with acetone in a sonicator to remove dirt and contaminants. The clean substrate was immersed in a 2.5 M HCl solutions for about 8 minutes at room temperature. The texture with a higher roughness can be achieved by exposing the surface to HCl for a longer period of time. After etching, the surface was rinsed thoroughly with deionized water and then immersed in boiling water for about 20 minutes. This resulted in formation of hierarchical solid features on two length scales. FIG. 21A shows a SEM image of the aluminum surface after formation of the solid features to show the larger features, and the FIG. 21B shows an enlarged view of a portion of the textured aluminum surface showing the smaller features. The complexity of the surface determined by interferometry was about 95% which is equal to a wenzel roughness of about 1.95. The roughness parameter however, did not account for the hierarchical nano features shown in FIG. 21A. Therefore, the actual wenzel roughness of the aluminum could be much higher.

**Solid Features on a Stainless Steel Surface Formed by Sandblasting**

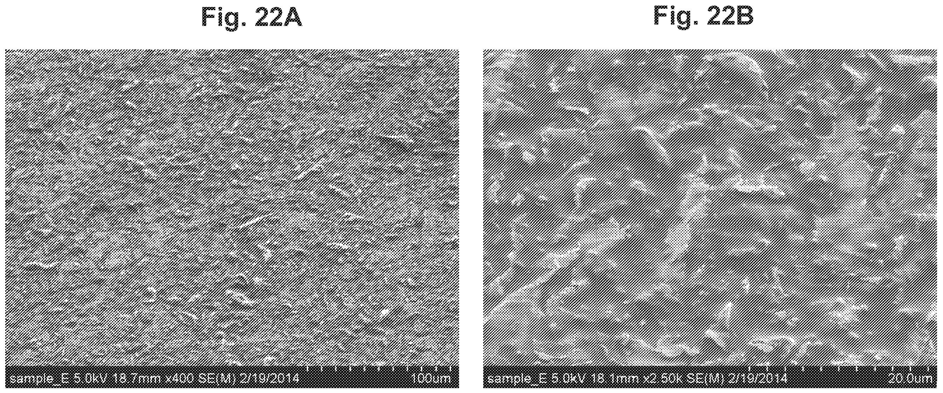

A stainless steel surface was sand blasted by fine sized silicon carbide sand particles. The stainless steel surface was sand blasted at a pressure of about 100 psi for about 30 seconds. The substrate was thoroughly rinsed with water and was then cleaned with acetone and isopropyl alcohol to remove excess sand particles and debris from the stainless steel surface. FIG. 22A shows a SEM imaged of the stainless steel surface and FIG. 22B shows an enlarged image of a portion of the stainless steel surface. The complexity of the surface was about 35% which was equal to a wenzel roughness of about 1.35.

**Barrier to Condensation of Liquid-Impregnated Surfaces having Different Viscosity Impregnating Liquids**

FIG. 23a shows a first liquid-impregnated surface that includes an 0.0001 $m^2$/s (100 cSt) silicone oil as the impregnating liquid. FIG. 23c shows a second liquid-impregnated surface that includes a 0.00001 $m^2$/s (10 cSt) silicone oil. Both liquid-impregnated surfaces were cooled to a temperature of about -5 degrees Celsius using a Peltier cooler while being disposed in a room set a temperature of about -20 degrees Celsius. This very high cooling was sufficient to overcome the cloaking phenomenon of the 0.00001 $m^2$/s (10 cSt) silicon oil included in the second liquid-impregnated surface of FIG. 23c. Water droplets condensing on the second liquid-impregnated surface had hemispherical shapes. In contrast, the barrier for coalescence of the higher viscosity 0.0001 $m^2$/s (100 cSt) oil included in the first liquid-impregnated surface was much higher even at this high degree of subcooling. As shown in the enlarged view of a portion of the first liquid-impregnated surface shown in FIG. 23b, the sphericity of the water droplets on the first liquid-impregnated surface is substantially lower relative to the sphericity observed on the second liquid-impregnated surface. Furthermore, the coalescing of the droplets is substantially reduced.

**Flow Parameters of Different Contact Liquids Disposed on Various Liquid-Impregnated Surfaces**

This example demonstrates results of a series of experiments that included flowing a number of different external phases on a number of different solid surfaces impregnated with different impregnating liquids. The results of the conducted experiments are shown in Table 3 below. In Table 3 below, $\theta_{os(a),receding}$ is the receding contact angle of the impregnating liquid (e.g., silicone oil, subscript 'o') on the surface (subscript 's') in the presence of air (subscript 'a'), and where $\theta_{os(e),receding}$ is the receding contact angle of the impregnating liquid (e.g., silicone oil, subscript 'o') on the surface (subscript 's') in the presence of the external phase (subscript 'e'). $\theta^*_c = Cos^{-1}(1/r)$ is the critical contact angle on the textured substrate and $\alpha^*$ is the roll-off angle.

Table 3: Experimental determination of roll-off angles.

| External phase (e) | Solid (s) | Impregnating liquid (o) | $\Theta_{os(a), receding}(°)$ | $\theta_{os(e),receding}(°)$ | $Cos^{-1}(1/r) = \theta_c^*(°)$ | $\theta_{os(a), receding},$ $\theta_{os(e),receding} < \theta_c^*$ | $\alpha^*$ a (°) |
|---|---|---|---|---|---|---|---|
| Mayonnaise | CW | PDC | 0 | 37 | 47 | Yes | 5 |
| Toothpaste | CW | PDC | 0 | 25 | 47 | Yes | 3 |
| Toothpaste | WPTFE | PDC | 20 | 67 | 50 | No | 45 |
| WB Paint | WPTFE | PDC | 20 | 67 | 50 | No | 65 |
| WB Paint | WPTFE | Krytox 1506 | 2 | 35 | 50 | Yes | 15 |
| Peanut Butter | WPTFE | PDC | 20 | 90 | 50 | No | 70 |
| Peanut Butter | WPTFE | CL | 5 | 35 | 50 | Yes | 20 |
| DI Water | OTS-treated silicon | Silicone oil | 0 | 0 | 60 | Yes | ~1 |
| DI Water | Silicon | Silicone oil | 0 | 122 | 60 | No | Did not roll off, even at 90° |

Slide off angles were measured using 500 $\mu$L volumes of the external fluid, except for water, for which 5$\mu$L droplets were used. It was observed that in experiments where $\theta_{os(e), rec} < \theta_c^*$, the roll-off angles, $\alpha^*$, were low (e.g., less than or equal to 20°), whereas in cases where $\theta_{rec,os(e)}, > \theta_c{}^*$, the roll-off angles, $\alpha^*$, were high (e.g., greater than or equal to 40°).

The silicon surfaces used in the experimental data shown in Table 3 above were 10 $\mu$m square silicon posts (10x10x10 $\mu$m) with 10 $\mu$m interpillar spacing. The 10 $\mu$m square silicon microposts were patterned using photolithographic and etched using deep reactive ion etching (DRIE). The textured substrates were cleaned using piranha solution and were coated with octadecyltrichlorosilane (OTS from Sigma-Aldrich) using a solution deposition method,.

The "WPTFE" surfaces shown in Table 3 above were composed of a 7:1 spray-coated mixture of a mixture of Teflon particles and Toko LF Dibloc Wax, sprayed onto a PET substrate. The carnauba wax (CW) surfaces were composed of PPE CW spray-coated onto a PET substrate. The impregnating liquids were propylene di(caprylate/caprate) ("PDC"), Krytox 1506, DOW PMX 200 silicone oil, 0.00001 $m^2$/s (10 cSt) ("Silicone oil") and Christo-lube EXP 101413-1 ("CL"). The external phases used were mayonnaise, toothpaste (e.g., Crest extra whitening), and red water based paint. Wenzel roughness, r, was measured using a Taylor hobson interferometer. Although precise estimates of $\phi$ could not be easily obtained, it was observed in the interferometer that $\phi$ was much less than 0.25 for all the impregnated surfaces described in the table, and tested, and using 0.25 as an upper bound on $\phi$ for our surfaces we determine that $cos^{-1}((1-\phi)/(r-\phi))=\theta_c$ is no more than 5° greater than the values for $\theta^*{}_c$.

## Conduit with a Liquid-Impregnated Surface and Tee Reservoir

FIG. 24 shows a pipe "Pipe 1" that includes a liquid-impregnated surface disposed on an inner surface of a sidewall of the Pipe 1. Solid features were formed on the inner surface of the pipe by filling it with a solution of beeswax particles suspended in ethanol and draining the solution for 30 seconds. The textured surface was left behind upon evaporation of the solvent from the solution that remained on the surface after the draining. The solid features were impregnated with propylene glycol dicaprate/dicaprylate to form a liquid-impregnated surface by spray coating. The pipe included a through hole portion. A plurality of through holes having a diameter of about 1/32 inch (0.79 mm) were defined in the through hole portion by power drilling. A tee was disposed around the through hole portion such that the tee defined a local reservoir for holding a replenishing supply of the impregnating liquid (as schematically depicted in FIG 16). A conduit was coupled to a tee with a larger diameter to communicate a constant supply of impregnating liquid from an external reservoir. A flow valve was installed in the conduit so that a flow rate of the impregnating liquid to the tee could be controlled. The Pipe 1 was coupled to a tank of toothpaste which served as the contact liquid, via a flow valve configured to control a flow rate of the contact liquid through the Pipe 1. The tank pressure was maintained at about 5 psi during all experiments. FIG. 25 shows the contact liquid flow valve open and the contact liquid flowing through the Pipe 1. FIG. 25 was taken about 1 min 20 seconds after opening the valve, showing that the non-Newtonian contact liquid flows sufficiently fast in the pipe with little or no sticking to the side walls of the pipe. The impregnating liquid valve was also opened such that a replenishing supply of the impregnating liquid is communicated to the liquid-impregnated surface through the holes. The flow rate of the contact liquid was about 13 grams/sec while the flow rate of the impregnating liquid was maintained at about 0.006 grams/sec. The flow rate ratio of impregnating liquid to the contact liquid is about 0.04%.

FIG. 26 shows a plot of the flow rate of the contact liquid through Pipe 1-4. The flow rate of the Pipe 1 was compared with the flow rate of the contact liquid through a second pipe "Pipe 2" that did not include the liquid-impregnated surface or the impregnating liquid reservoir, a third pipe "Pipe 3", that included a liquid-impregnated surface but did not include an impregnating liquid reservoir, and a fourth pipe "Pipe 4", that include a impregnating liquid reservoir without a plurality of solid features on the inner surface of the pipe. Pipe 2 had the lowest flow rate of the contact liquid which remained at about 0.4 grams/sec throughout the duration of the experiment. Pipe 3 had a substantially higher flow rate of the contact liquid than Pipe 2. The Pipe 3 flow rate peaked at about 5.4 grams/sec but tapered down to about 2.5 grams/sec. Pipe 4 has a initial higher flow rate at about 9.0 grams/sec, but decreased dramatically to about the flow of Pipe 2. In contrast, the Pipe 1 had a substantially higher flow rate of the contact liquid than the Pipe 2, Pipe 3, and Pipe 4 flow rates. The Pipe 1 had a flow rate of about 13 grams/sec which reduced to about 12 grams/sec after about 140 seconds of operation. Pipe 4 had an average flow rate of liquid lubricant of about 0.15 grams/sec, which is significantly higher than 0.006 grams/sec in Pipe 1. Despite the greater flow of liquid lubricant to the inner surface of Pipe 4 (non coating), the flowrate of the contact liquid was still much less than the flow rate of the contact liquid in pipe 1 (liquid-impregnated surface with continuous liquid resupply).

While various embodiments of the system, methods and devices have been described above, it should be understood that they have been presented by way of example only, and not limitation. Where methods and steps described above indicate certain events occurring in certain order, those of ordinary skill in the art having the benefit of this disclosure would recognize that the ordering of certain steps may be modified and such modification are in accordance with the variations of the invention. Additionally, certain of the steps may be performed concurrently in a parallel process when possible, as well as performed sequentially as described above. The embodiments have been particularly shown and described, but it will be understood that various changes in form and details may be made.

## Claims

1. A method, comprising:

   disposing a plurality of solid features (112) on a first surface (110), the first surface (110) having a first roll off angle; communicating an impregnating liquid (120) into the interstitial regions between the plurality of solid features (112), the impregnating liquid (120) and the plurality of solid features (112) at least partially forming a second surface having a second roll off angle less than the first roll off angle; and
   reapplying the impregnating liquid via a liquid delivery mechanism (114) to maintain the second roll off angle of the second surface less than the first roll off angle, the liquid delivery mechanism (114) including a reservoir configured to contain a supply of impregnating liquid (120) and a pumping mechanism configured to transfer impregnating liquid (120) from the reservoir to the interstitial regions.

2. The method of claim 1, wherein the impregnating liquid (120) is replenished from a multi-phase liquid in contact with the impregnating liquid (120) disposed in the interstitial regions.

3. The method of any of the preceding claims, wherein the liquid delivery mechanism (114) is in fluid communication with the interstitial regions by at least one of a capillary action and a pressure differential.

4. The method of claim 1, wherein the method includes disposing a contact liquid on the second surface, the contact liquid different from the liquid-impregnated surface.

5. The method of claim 4, wherein the contact liquid includes at least one of a food, cosmetic, cement, asphalt, tar, ice cream, egg yolk, water, alcohol, mercury, gallium, refrigerant, toothpaste, paint, peanut butter, jelly, jam, mayonnaise, ketchup, mustard, condiment, laundry detergent, consumer product, gasoline, petroleum product, oil, biological fluid, blood, and plasma.

6. The method of claim 4, wherein the first surface (110) is a surface of at least one of a container, a pipeline, nozzle, valve, a conduit, a vessel, a bottle, a mold, a die, a chute, a bowl, a tub, a bin, a cap, a laundry detergent cap, and a tube.

7. The method of claim 6, wherein a contact liquid is disposed on the second surface, the contact liquid including at least one of a food, cosmetic, cement, asphalt, tar, ice cream, egg yolk, water, alcohol, mercury, gallium, refrigerant, toothpaste, paint, peanut butter, jelly, jam, mayonnaise, ketchup, mustard, condiment, laundry detergent, consumer product, gasoline, petroleum product, oil, biological fluid, blood, plasma.

8. The method of any of the preceding claims, wherein the reservoir containing the supply of impregnating liquid (120) is at a higher pressure than the interstitial regions such that the supply of impregnating liquid (120) is forced into the interstitial regions by the pressure differential.

9. The method of any of the preceding claims, wherein the liquid-impregnated surface has at least one of an emerged area fraction $\phi$ having a range of about $0 < \phi < 0.25$, and a spreading coefficient $S_{oe(v)} < 0$.

10. The method of claim 9, wherein $0.01 < \phi < 0.25$.

11. The method of claim 10, wherein the solid features (112) comprise at least one of a chemically modified surface, a coated surface, and a surface bonded with a monolayer.

12. The method of any of the preceding claims, wherein the plurality of solid features (112) have a Wenzel roughness greater than about 1.01.

## Patentansprüche

1. Verfahren, das Folgendes umfasst:

   Anordnen mehrerer fester Merkmale (112) auf einer ersten Oberfläche (110), wobei die erste Oberfläche (110) einen ersten Abrollwinkel aufweist;
   Übertragen einer Imprägnierflüssigkeit (120) in die Zwischenräume bildenden Regionen zwischen den mehreren festen Merkmalen (112), wobei die Imprägnierflüssigkeit (120) und die mehreren festen Merkmale (112) wenigstens teilweise eine zweite Oberfläche ausbilden, die einen zweiten Abrollwinkel aufweist, der kleiner als der erste Abrollwinkel ist; und

erneutes Aufbringen der Imprägnierflüssigkeit über einen Flüssigkeitsabgabemechanismus (114), um den zweiten Abrollwinkel der zweiten Oberfläche kleiner als den ersten Abrollwinkel zu halten, wobei der Flüssigkeitsabgabemechanismus (114) ein Reservoir, das konfiguriert ist, um eine Zufuhr von Imprägnierflüssigkeit (120) zu enthalten und einen Pumpmechanismus beinhaltet, der konfiguriert ist, um Imprägnierflüssigkeit (120) von dem Reservoir in die Zwischenräume bildenden Regionen zu transportieren.

2. Verfahren nach Anspruch 1, wobei die Imprägnierflüssigkeit (120) aus einer Mehrphasenflüssigkeit nachgefüllt wird, die mit der Imprägnierflüssigkeit (120), die in den Zwischenräume bildenden Regionen angeordnet ist, in Berührung steht.

3. Verfahren nach einem der vorhergehenden Ansprüche, wobei der Flüssigkeitsabgabemechanismus (114) durch eine Kapillarwirkung und/oder eine Druckdifferenz in Fluidverbindung mit den Zwischenräume bildenden Regionen steht.

4. Verfahren nach Anspruch 1, wobei das Verfahren das Anordnen einer Berührungsflüssigkeit auf der zweiten Oberfläche beinhaltet, wobei sich die Berührungsflüssigkeit von der mit Flüssigkeit imprägnierten Oberfläche unterscheidet.

5. Verfahren nach Anspruch 4, wobei die Berührungsflüssigkeit Folgendes beinhaltet: ein Lebensmittel, Kosmetika, Zement, Asphalt, Teer, Eiscreme, Eigelb, Wasser, Alkohol, Quecksilber, Gallium, Kühlmittel, Zahnpasta, Farbe, Erdnussbutter, Gelee, Marmelade, Mayonnaise, Ketchup, Senf, Würzsauce, Waschmittel, Verbraucherprodukte, Benzin, Erdölprodukte, Öl, biologische Flüssigkeit, Blut und/oder Plasma.

6. Verfahren nach Anspruch 4, wobei die erste Oberfläche (110) eine Oberfläche von Folgendem ist: eines Behälters, einer Rohrleitung, einer Düse, eines Ventils, einer Leitung, eines Gefäßes, einer Flasche, einer Form, einer Matrize, einer Rutsche, einer Schüssel, einer Wanne, eines Kastens, einer Kappe, einer Waschmittelkappe und/oder eines Rohrs.

7. Verfahren nach Anspruch 6, wobei eine Berührungsflüssigkeit auf der zweiten Oberfläche angeordnet ist, wobei die Berührungsflüssigkeit Folgendes beinhaltet: Lebensmittel, Kosmetika, Zement, Asphalt, Teer, Eiscreme, Eigelb, Wasser, Alkohol, Quecksilber, Gallium, Kühlmittel, Zahnpasta, Farbe, Erdnussbutter, Gelee, Marmelade, Mayonnaise, Ketchup, Senf, Würzsauce, Waschmittel, Verbraucherprodukte, Benzin, Erdölprodukte, Öl, biologische Flüssigkeit, Blut und/oder Plasma.

8. Verfahren nach einem der vorhergehenden Ansprüche, wobei das Reservoir, das die Zufuhr von Imprägnierflüssigkeit (120) enthält, unter einem höheren Druck als die Zwischenräume bildenden Regonen steht, derart, dass die Zufuhr von Imprägnierflüssigkeit (120) durch die Druckdifferenz in die Zwischenräume bildenden Regionen gezwungen wird.

9. Verfahren nach einem der vorhergehenden Ansprüche, wobei die mit Flüssigkeit imprägnierte Oberfläche einen entstandenen Flächenanteil $\phi$, der einen Bereich von etwa $0 < \phi < 0{,}25$ aufweist, und/oder einen Ausbreitungskoeffizienten $S_{oe(V)} < 0$ aufweist.

10. Verfahren nach Anspruch 9, wobei $0{,}01 < \phi < 0{,}25$.

11. Verfahren nach Anspruch 10, wobei die festen Merkmale (112) eine chemisch modifizierte Oberfläche, eine beschichtete Oberfläche und/oder eine mit einer Monoschicht verbundene Oberfläche umfassen.

12. Verfahren nach einem der vorhergehenden Ansprüche, wobei die mehreren festen Merkmale (112) eine Wenzel-Rauheit von über etwa 1,01 aufweisen.

**Revendications**

1. Procédé, comprenant :

la disposition d'une pluralité d'éléments solides (112) sur une première surface (110), la première surface (110) présentant un premier angle d'inclinaison ;

la communication d'un liquide d'imprégnation (120) dans les régions interstitielles entre la pluralité d'éléments solides (112), le liquide d'imprégnation (120) et la pluralité d'éléments solides (112) formant au moins partiellement une seconde surface ayant un second angle d'inclinaison inférieur au premier angle d'inclinaison ; et

la réapplication du liquide d'imprégnation par l'intermédiaire d'un mécanisme de distribution de liquide (114) pour maintenir le second angle d'inclinaison de la seconde surface inférieur au premier angle d'inclinaison, le mécanisme de distribution de liquide (114) comportant un réservoir conçu pour contenir une alimentation en liquide d'imprégnation (120) et un mécanisme de pompage conçu pour transférer le liquide d'imprégnation (120) du réservoir vers les régions interstitielles.

2. Procédé selon la revendication 1, dans lequel le liquide d'imprégnation (120) est reconstitué à partir d'un liquide multiphase en contact avec le liquide d'imprégnation (120) disposé dans les régions interstitielles.

3. Procédé selon l'une quelconque des revendications précédentes, dans lequel le mécanisme de distribution de liquide (114) est en communication fluidique avec les régions interstitielles par une action capillaire et/ou un différentiel de pression.

4. Procédé selon la revendication 1, dans lequel le procédé comporte la disposition d'un liquide de contact sur la seconde surface, le liquide de contact étant différent de la surface imprégnée de liquide.

5. Procédé selon la revendication 4, dans lequel le liquide de contact comporte un aliment et/ou un cosmétique et/ou un ciment et/ou un asphalte et/ou un goudron et/ou une crème glacée et/ou un jaune œuf et/ou de l'eau et/ou de l'alcool et/ou du mercure et/ou du gallium et/ou un réfrigérant et/ou du dentifrice et/ou de la peinture et/ou du beurre d'arachide et/ou de la gelée et/ou de la confiture et/ou de la mayonnaise et/ou du ketchup et/ou de la moutarde et/ou un condiment et/ou un détergent à lessive et/ou un produit de consommation et/ou de l'essence et/ou un produit pétrolier et/ou du pétrole et/ou du fluide biologique et/ou du sang et/ou du plasma.

6. Procédé selon la revendication 4, dans lequel la première surface (110) est une surface d'un conteneur et/ou d'une canalisation et/ou d'une buse et/ou d'une valve et/ou d'un conduit et/ou d'un récipient et/ou d'une bouteille et/ou d'un moule et/ou d'une matrice et/ou d'une goulotte et/ou d'un bol et/ou d'une cuve et/ou d'un bac et/ou d'un bouchon et/ou d'un bouchon de détergent à lessive et/ou d'un tube.

7. Procédé selon la revendication 6, dans lequel un liquide de contact est disposé sur la seconde surface, le liquide de contact comportant un aliment et/ou un cosmétique et/ou un ciment et/ou un asphalte et/ou un goudron et/ou une crème glacée et/ou un jaune œuf et/ou de l'eau et/ou de l'alcool et/ou du mercure et/ou du gallium et/ou un réfrigérant et/ou du dentifrice et/ou de la peinture et/ou du beurre d'arachide et/ou de la gelée et/ou de la confiture et/ou de la mayonnaise et/ou du ketchup et/ou de la moutarde et/ou un condiment et/ou un détergent à lessive et/ou un produit de consommation et/ou de l'essence et/ou un produit pétrolier et/ou du pétrole et/ou du fluide biologique et/ou du sang et/ou du plasma.

8. Procédé selon l'une quelconque des revendications précédentes, dans lequel le réservoir contenant l'alimentation en liquide d'imprégnation (120) est à une pression plus élevée que les régions interstitielles de telle sorte que l'alimentation en liquide d'imprégnation (120) est forcée dans les régions interstitielles par la différence de pression.

9. Procédé selon l'une quelconque des revendications précédentes, dans lequel la surface imprégnée de liquide présente une fraction de surface émergée $\phi$ ayant une plage d'environ $0 < \phi < 0{,}25$ et/ou un coefficient d'étalement $S_{oe(V)} < 0$.

10. Procédé selon la revendication 9, dans lequel $0{,}01 < \phi < 0{,}25$.

11. Procédé selon la revendication 10, dans lequel les éléments solides (112) comprennent une surface chimiquement modifiée et/ou une surface revêtue et/ou une surface liée avec une monocouche.

12. Procédé selon l'une quelconque des revendications précédentes, dans lequel la pluralité d'éléments solides (112) présentent une rugosité Wenzel supérieure à environ 1,01.

**Fig. 1**

Apparatus
10

Liquid Impregnated Surface
100

| Surface 110 | Solid Features 112 | Impregnating Liquid 120 |

Liquid Delivery Mechanism
114

Contact Liquid
CL

EP 3 406 353 B1

## Fig. 2A

## Fig. 2B

Fig. 3

210

212

214

Fig. 4

EP 3 406 353 B1

**Fig. 5**

Fig. 6

Fig. 7

## Fig. 8

EP 3 406 353 B1

| Interface | Configuration | Total interface energy per unit area | Equivalent criteria | | | |
|---|---|---|---|---|---|---|
| **Oil-Solid-Air** | *A1* Dry | $E_{A1} = r\gamma_{oa}$ | $E_{A1} < E_{A2}, E_{A3}$ | $S_{os(a)} < -\gamma_{oa}\left(\dfrac{r-1}{r-\phi}\right)$ | $\theta_{os(a)} > \theta_c$ |
| | *A2* Impregnated, emerged | $E_{A2} = (r-\phi)\gamma_{os} + \phi\gamma_{sa} + (1-\phi)\gamma_{oa}$ | $E_{A2} < E_{A3}, E_{A1}$ | $-\gamma_{oa}\left(\dfrac{r-1}{r-\phi}\right) < S_{os(a)} < 0$ | $0 < \theta_{os(a)} < \theta_c$ |
| | *A3* Encapsulated | $E_{A3} = \gamma_{oa} + r\gamma_{os}$ | $E_{A3} < E_{A2}, E_{A1}$ | $S_{os(a)} \geq 0$ | $\theta_{os(a)} = 0$ |
| **Oil-Solid-Water** | *W1* Impaled | $E_{w1} = r\gamma_{sw}$ | $E_{w1} < E_{w2}, E_{w3}$ | $S_{os(w)} < -\gamma_{ow}\left(\dfrac{r-1}{r-\phi}\right)$ | $\theta_{os(w)} > \theta_c$ |
| | *W2* Impregnated, emerged | $E_{w2} = (r-\phi)\gamma_{os} + \phi\gamma_{sw} + (1-\phi)\gamma_{ow}$ | $E_{w2} < E_{w1}, E_{w3}$ | $-\gamma_{ow}\left(\dfrac{r-1}{r-\phi}\right) < S_{os(w)} < 0$ | $0 < \theta_{os(w)} < \theta_c$ |
| | *W3* Encapsulated | $E_{w3} = \gamma_{ow} + r\gamma_{os}$ | $E_{w3} < E_{w1}, E_{w2}$ | $S_{os(w)} \geq 0$ | $\theta_{os(w)} = 0$ |

## Fig. 9

Fig. 10

▨ 9.34 cP silicone oil   ▲ 970 cP silicone oil   ＋ BMIm   — BMIm / nanograss   ◇ No impregnating liquid

EP 3 406 353 B1

Fig. 11

EP 3 406 353 B1

Fig. 12

300

310

d

320 314 312

## Fig. 13A

## Fig. 13B

Fig. 14

## Fig. 15A

## Fig. 15B

EP 3 406 353 B1

Fig. 16

Fig. 17

Fig. 18A

Fig. 18B

# Fig. 19

80

| Disposing a Plurality of Solid Features on a First Surface which has a First Roll Off Angle | 82 |

| Applying an Impregnating Liquid to the First Surface to form a Second Surface, in the Interstitial Regions of the Surface Features, having a Second Roll Off Angle | 84 |

| Reapplying Impregnating Liquid to Maintain the Second Roll Off Angle | 86 |

| Applying Impregnating Liquid from a Multi-Phase Liquid | 88 |

Fig. 20B

Fig. 20A

Fig. 21A

Fig. 21B

EP 3 406 353 B1

Fig. 22A

Fig. 22B

sample_E 5.0kV 18.7mm x400 SE(M) 2/19/2014          100um

sample_E 5.0kV 18.1mm x2.50k SE(M) 2/19/2014          20.0um

EP 3 406 353 B1

**Fig. 23**

100 cSt Silicon Oil

10 cSt Silicon Oil

The bright white spots visible here are water droplets that are not coalescing with the bigger droplet due to lubricant layer between them

EP 3 406 353 B1

## Fig. 24

## Fig. 25

Contact Liquid Reservoir

Contact Liquid Flow Valve

Through-hole Portion

Conduit

Tee

Impregnating Liquid Flow Valve

Pipe

Contact Liquid

Fig. 26

EP 3 406 353 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012100099 A
- US 2013032316 A
- US 8574704 B
- US 8535779 B
- US 61878481

**Non-patent literature cited in the description**

- **GUNSTONE, F.** Vegetable Oils in Food Technology: Composition, Properties and Uses. Wiley, John and Sons Inc, May 2011
- **WHITE, I.** Effect of Surfactants on the Evaporation of Water Close to 100 C. *Industrial & Engineering Chemistry Fundamentals,* 1976, vol. 15.1, 53-59
- **BARNES, G.T.** The potential for monolayers to reduce the evaporation of water from large water storages. *Agricultural Water Management,* 2008, vol. 95.4, 339-353